(19) Europäisches Patentamt
European Patent Office
Office européen des brevets

(11) Veröffentlichungsnummer: **0 209 840 B1**

(12) **EUROPÄISCHE PATENTSCHRIFT**

(45) Veröffentlichungstag der Patentschrift: **02.01.92**

(51) Int. Cl.$^5$: **C01B 33/32**, C01B 33/34, C11D 3/12

(21) Anmeldenummer: **86109717.8**

(22) Anmeldetag: **16.07.86**

(54) **Schichtsilikate mit beschränktem Quellvermögen, Verfahren zu ihrer Herstellung und ihre Verwendung in Wasch- und Reinigungsmitteln.**

(30) Priorität: **24.07.85 DE 3526405**

(43) Veröffentlichungstag der Anmeldung:
**28.01.87 Patentblatt 87/05**

(45) Bekanntmachung des Hinweises auf die Patenterteilung:
**02.01.92 Patentblatt 92/01**

(84) Benannte Vertragsstaaten:
**AT BE CH DE FR GB IT LI NL**

(56) Entgegenhaltungen:
**FR-A- 1 565 348**
**FR-A- 2 189 491**
**FR-A- 2 206 272**
**US-A- 3 844 978**
**US-A- 3 844 979**

**CHEMICAL ABSTRACTS, Band 100, Nr. 14, April 1984, Seite 142, Zusammenfassung Nr. 105900e, Columbus, Ohio, US; & JP-A-58 181 718 (KUNIMINE KOGYO K.K.) 24-10-1983**

(73) Patentinhaber: **Henkel Kommanditgesellschaft auf Aktien**
**Postfach 1100 Henkelstrasse 67**
**W-4000 Düsseldorf-Holthausen(DE)**

(72) Erfinder: **Wichelhaus, Winfried, Dr.**
**Stifterstrasse 3**
**W-4020 Mettmann(DE)**
Erfinder: **von Rybinski, Wolfgang, Dr.**
**Johannes-Hess-Strasse 31**
**W-4000 Düsseldorf(DE)**
Erfinder: **Upadek, Horst, Dr.**
**Im Sandforst 26**
**W-4030 Ratingen(DE)**

**EP 0 209 840 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue synthetische, feinteilige, wasserunlösliche Schichtsilikate mit smectitähnlicher Kristallphase, die sich gegenüber den bekannten natürlichen und synthetischen Schichtsilikaten auf Smectitbasis - insbesondere Montmorillonit, Hectorit und Saponit - durch ein deutlich verringertes Quellvermögen in wäßriger Suspension auszeichnen. Die Erfindung betrifft weiterhin Verfahren zur Herstellung dieser smectitähnlichen Schichtsilikate und ihre Verwendung als umweltfreundliche Bestandteile von Wasch- und Reinigungsmitteln, insbesondere in ihrer Funktion als Builderbestandteil für phosphatarme und phosphatfreie synthetische Tenside enthaltende Textilwaschmittel.

### Zum Stand der Technik

Der Ersatz der Phosphatbuilder - insbesondere Natriumtripolyphosphat (STP) - in synthetische Tenside enthaltenden Wasch- und Reinigungsmitteln ist z.B. in der grundlegenden DE-AS 24 12 837 beschrieben. In der Praxis hat sich insbesondere auf dem Gebiet der heutigen Textilwaschmittel Zeolith NaA als vollwertiger Ersatz für das noch vor einem Jahrzehnt nahezu ausschließlich als Waschmittelbuilder benutzte STP erwiesen. Schon frühzeitig ist dabei auch die gemeinsame Verwendung solcher synthetischer, kristalliner, nicht quellender Alumosilikate vom Zeolith-Typ in Abmischung mit wasserunlöslichen, quellfähigen Magnesium- und/oder Aluminiumsilikaten von der Art Bentonit, Montmorillonit, Hectorit oder Saponit vorgeschlagen worden. So schildert die DE-AS 25 27 388 pumpfähige, in ihrer Stabilität verbesserte, wäßrige Suspensionen von beispielsweise Zeolith A, die als dispergierend wirkenden Bestandteil stark quellfähige Schichtsilikate mit. Smectitstruktur der zuvor genannten Art enthalten.

Zahlreiche Vorschläge in Literatur und Praxis beschäftigen sich mit dem teilweisen oder vollständigen Ersatz des aus ökologischen Gründen unerwünschten STP-Bilders in Textilwaschmitteln durch Systeme auf Basis synthetischer, kristalliner, nichtquellender Zeolithe, insbesondere auf Basis von Zeolith NaA. Es hat sich dabei die Praxis herausgebildet, zusammen mit dem unlöslichen kristallinen Zeolith als Hauptbuilderbestandteil sogenannte Co-Bilder in geringen Mengen mitzuverwenden. Diese Co-Builder sind in der Regel lösliche Komponenten, die befähigt sind, Calcium und/oder Magnesiumionen komplex zu binden, aus festen Verschmutzungen auf der Wäsche entsprechende Erdalkaliionen herauszubrechen und damit sowohl die Primär- als auch die Sekundärwaschkraft gegenüber den co-builderfreien Waschmittelgemischen deutlich zu verbessern . Als Primärwaschkraft wird dabei insbesondere das Ausmaß der Aufhellung durch ein- oder mehrmaliges Waschen von angeschmutzten Testmaterialien unter Standardbedingungen verstanden. Die Sekundärwaschkraft bezieht sich u.a. auf das Ausmaß der Vergrauung und der Inkrustation an der Textilfaser nach wiederholter Wäsche unter Standardbedingungen, beispielsweise nach 25 oder nach 50 Waschvorgängen mit dem jeweils ausgewählten Waschmittel.

Für STP-freie Waschmittel auf Basis synthetischer Tenside und Zeolith A als Hauptbuilderbestandteil hat sich heute z.B. die Verwendung von Nitrilotriessigsäuresalzen (NTA) und/oder Polyphosphonsäuresalzen, wie entsprechende Salze der Hydroxyethandiphosphonsäure (HEDP),als Co-Builder-Bestandteil eingebürgert. Zwar werden diese Co-Builder aufgrund ihrer hohen Wirksamkeit nur in geringen Mengen im Waschmittel mitverwendet - in der Regel wenige Prozentgleichwohl erscheint es heute im Licht erhöhter ökologischer Anforderungen und insbesondere im Sinne des Gewässerschutzes wünschenswert, auch noch diese geringen Anteile zugunsten anderer Komponenten vergleichbarer Wirkung vollständig oder wenigstens teilweise zu ersetzen. In Praxis und Literatur bekannte Co-Builder dieser Art sind beispielsweise organische makromolekulare, Carboxyl-und/oder Hydroxylgruppen aufweisende Polymerverbindungen, wie sie ebenfalls beispielweise bereits in der DE-AS 25 27 388 beschrieben sind.

Die Mitverwendung von stark quellfähigen, feinteiligen Schichtsilikaten in Waschmitteln ist seit vielen Jahrzehnten bekannt. Natürliche und/oder synthetische kristalline Smectite mit stark quellfähiger Schichtstruktur sind in verschiedenstem Zusammenhang als Bestandteil von Textilwaschmitteln vorgeschlagen worden. Natürlicher Bentonit beispielsweise ist als Waschmittel bzw. Waschmittelersatz immer wieder vorgeschlagen worden. Entsprechende synthetische oder halbsynthetische, wasserunlösliche, feinteilige Schichtsilikate mit Smectitstruktur und insbesondere entsprechende Hectorite, Saponite und Montmorillonite sind heute bekannte Handelsprodukte für zahlreiche Anwendungsgebiete.

Stets spielt hier die hohe Quellfähigkeit eine entscheidende Rolle, die auf die Fähigkeit der hier betroffenen Klasse von Schichtsilikaten zurückgeht, Wasser und/oder organische, kationische Verbindungen unter Aufweitung der Schichtabstände in das Kristallgitter einlagern zu können. Die Verwendung solcher Materialien im Zusammenhang mit Textilwaschmitteln geht insbesondere auf zwei Ansätze zurück: Es ist bekannt, daß sich quellfähige Schichtsilikate und insbesondere Montmorillonit, Hectorit und Saponit in der Natriumform auf Textilfasern in dünner Schicht ablagern und damit die Weichheit und den Griff des

gewaschenen Textils beeinflussen. Auf diese Weise ist versucht worden, Waschen und Weichmachen von Textilien in einem Vorgang zu verbinden. Diese an sich altbekannte Möglichkeit wird in jüngerer Zeit beispielsweise wieder aufgegriffen im Rahmen der Lehre der DE-PS 23 34 899.

Der bekannten Mitverwendung von stark quellenden Tonen mit smectitartiger Schichtstruktur, insbesondere Bentonit, zusammen mit feinkristallinen synthetischen Zeolithen als Builder in Waschmitteln auf Basis von synthetischen Tensiden, liegt nach neueren Vorschlägen eine andere Überlegung zu Grunde: die kristallinen Alumosilikate sollen in der Waschflotte in kürzester Zeit zur Suspension der gewünschten feinsten Primärteilchen zerfallen. Wenn bei der Herstellung der Waschmittel und/oder Waschmittel-Builderkomponenten Bedingungen eingesetzt worden sind, die zur Zusammenballung der feinen Zeolithteilchen zu nur schwer aufsprengbaren Agglomeraten führen, dann führt die innige Einmischung der stark quellfähigen Smectit-Tone in ein solches Zeolithmaterial zur erwünschten Sprengwirkung in der Waschmittelflotte und damit zum raschen Zerfall der unlöslichen Anteile des Waschmittelgemisches in die angestrebte feinstteilige Form.

## Die Aufgabe der Erfindung

Die Aufgabe der Erfindung knüpft an das geschilderte Bedürfnis an, möglichst umweltneutrale Bestandteile für Buildersysteme zum vollständigen oder teilweisen Ersatz von STP auf Basis von unlöslichen feinstteiligen synthetischen kristallinen Zeolithmaterialien und insbesondere auf Basis von Zeolith NaA zu entwickeln, die die Mitverwendung bisher eingesetzter Co-Bilder - insbesondere NTA und/oder Polyphosphonsäuresalz - wenigstens weitgehend überflüssig machen, wobei gleichwohl eine gute Primär- und/oder Sekundärwaschkraft des Waschmittelgemisches im Sinne der heutigen hohen Anforderungen gesichert sein soll.

## Die Lehre der Erfindung

Die erfindungsgemäße Lehre geht von der überraschenden Feststellung aus, daß bestimmte Schichtsilikatverbindungen mit smectitähnlicher Gitterstruktur - die jedoch mit der Struktur der bekannten vergleichbaren Schichtsilikate des Smectittypes nicht identisch ist - besonders geeignet sind, die technische Lösung der erfindungsgemäßen Aufgabe zu ermöglichen. Überraschenderweise sind es gerade die im folgenden geschilderten Schichtsilikate mit smectitartiger Kristallstruktur, jedoch einem vergleichsweise deutlich verringerten Quellvermögen in Wasser, die zur Lösung der gestellten Aufgabe führen.

## Gegenstand der Erfindung

Gegenstand der Erfindung sind dementsprechende in einer ersten Ausführungsform synthetische, feinteilige, wasserunlösliche Schichtsilikate mit smectitähnlicher Kristallphase, jedoch erhöhten Gehalten an gebundenem Alkali und Silikat und einem im Vergleich zu reinen Schichtsilikaten dieses Typs in wäßrigen Suspension deutlich reduzierten Quellvermögen bestimmt als Quotient des Sedimentvolumens ($V_s$)/Gesamt-Volumen (V) nach vorheriger Behandlung mit überschüssiger Sodalösung, sorgfältigem Waschen und 20 Stunden nach Aufschlämmung in 9 Gewichtsteilen Wasser/ein Gewichtsteil Schichtsilikat - von $V_s/V$ kleiner als 0,6 mit der Oxidsummenformel

$$MgO \,.\, aM_2O \,.\, bAl_2O_3 \,.\, cSiO_2 \,.\, nH_2O$$

worin M für Natrium oder für Mischungen von Natrium und Lithium mit der Maßgabe steht, daß das .Molverhältnis von Natrium : Lithium wenigstens 2 beträgt und worin weiterhin die Parameter a, b, c und n jeweils eine Zahl in den folgenden Bereichen bedeuten

a = 0,05 bis 0,4
b = 0 bis 0,3
c = 1,2 bis 2,0
n = 0,3 bis 3,0

Dabei steht in dieser Oxidsummenformel der Wassergehalt $nH_2O$ für das in der Kristallphase gebundene Wasser.

Gegenstand der Erfindung ist in weiteren im nachfolgenden geschilderten Ausführungsformen das Verfahren zur Herstellung der hier geschilderten neuen synthetischen Schichtsilikate mit smektitähnlicher Kristallphase, jedoch erhöhten Gehalten an gebundenem Alkali und Silikat und deutlich reduziertem Quellvermögen in wäßriger Suspension und die Verwendung dieser neuen nicht oder nur schwach

quellenden Schichtsilikate als Mischungsbestandteil in Builder-Kompositionen für phosphatarme und phosphatfreie Wasch- und Reinigungsmittel auf Basis synthetischer Tenside beziehungsweise als Co-Builder zusammen mit feinteiligen kristallinen Zeolithen und insbesondere Zeolith NaA in insbesondere STP-freien Textilwaschmitteln.

Nachfolgend werden zunächst die neuen wasserunlöslichen und nur beschränkt quellfähigen Schichtsilikate beschrieben.

Die neuen wasserunlöslichen Schichtsilikate mit deutlich reduziertem Quellvermögen in Wasser

Die neuen erfindungsgemäßen synthetischen, wasserunlöslichen, feinstteiligen Tonmineralien sind als Schichtsilikate anzusprechen, die Strukturmerkmale glimmerartiger Schichtsilikate aufweisen, allerdings mit einer Fehlordnung bezüglich der Verknüpfung benachbarter Schichten. Eine Strukturformel, wie sie gewöhnlich für Tonminerale in idealisierter Form angegeben wird, läßt sich für die erfindungsgemäßen Schichtsilikate nur unter zusätzlichen Annahmen aufstellen.

Struktur und Reflexlagen von Smectiten werden in der Literatur ausführlich beschrieben, beispielsweise von G.W.Brindley und G.Brown in "Crystal Structures of Clay Minerals and their X-Ray Identification", Mineral.Soc., London (1980),S.305 ff. Danach besitzen Smectite vier charakteristische Reflexe, die in folgenden Bereichen der Gitterabstände d liegen:
9,6 - 15,5 Å (je nach $H_2O$-Gehalt)
4,45 - 4,66 Å
2,55 - 2,60 Å
1,49 - 1,54 Å
Å = $10^{-8}$cm

Aus den Röntgenbeugungsdiagrammen der erfindungsgemäßen Schichtsilikate geht hervor, daß diese mit den Smectiten strukturell verwandt sind. So liegen beispielsweise die Maxima der Reflexe des erfindungsgemäßen Schichtsilikats 1 bei d (Å) 13,4; 4,5; 2,57 und 1,535.

Die chemische Zusammensetzung der neuen Verbindungen weist allerdings mehr $Na_2O$ und $SiO_2$ auf als die zugehörigen Smectite Saponit beziehungsweise Hectorit. Es ist anzunehmen, daß die erfindungsgemäßen Schichtsilikate neben dem für glimmerartige Verbindungen dieser Art typischen Schichtverband Baueinheiten von eingelagerten Natriumsilikaten enthalten. Der Schluß liegt nahe, daß es sich hierbei um Natrium-Polysilikate, insbesondere um solche mit Schichtstruktur handelt, d. h. um sogenannte Natrium-Phyllosilikate. Verbindungen dieser Art sind in der Literatur beschrieben, vergleiche R. K. ILER "The Chemistry of Silica" 158 - 160, J. Wiley + Sons, New York, 1979.

Solche Natriumpolysilikate mit Schichtstruktur kommen in der Natur vor, sie lassen sich aber auch synthetisch gewinnen. Die Synthesebedingungen für solche Natriumpolysilikate und Smectite sind ähnlich. Die Kristallisation der erfindungsgemäßen Schichtsilikate kann vermutlich auf Grund von Struktur- und Synthese-Aspekten als Mischkristallbildung verstanden werden, bei der Natriumpolysilikat in Smectit eingelagert wird. Aus den Röntgenbeugungsdiagramn ist zu entnehmen, daß eine solche Einlagerung nicht regelmäßig erfolgt sondern in den Kristalliten zu Fehlordnungen führt, Eine kristallographische Charakterisierung durch Gitterkonstanten, die eine Elementarzelle beschreiben, ist somit nicht möglich.

Die Zusammensetzung der synthetischen Schichtsilikate der Erfindung läßt sich durch die bereits zitierte oxidische Summenformel

$$MgO \,.\, aM_2O \,.\, bAl_2O_3 \,.\, cSiO_2 \,.\, nH_2O$$

ausdrücken, in der die Parameter a, b, c und n eine Zahl in den weiter oben angegebenen breitesten Bereichen darstellen und M Natrium oder ein Gemisch von Natrium und Lithium mit überwiegendem Natriumgehalt ist. In einer bevorzugten Ausführungsform bedeuten die Parameter a, b und c jeweils eine Zahl innerhalb der folgenden Bereiche
a = 0,15 bis 0,30
b = 0 bis 0,10
c = 1,3 bis 1,5.

Es ist weiterhin bevorzugt, daß das Verhältnis von a/b gleich oder größer als 3 und insbesondere gleich oder größer als 4 ist. Als besonders interessant hat sich beispielsweise ein synthetisches Schichtsilikat mit deutlich reduziertem Quellvermögen erwiesen, das - ohne Berücksichtigung seines gebundenen Wassers - durch die oxidische Summenformel MgO . 0,25 $Na_20$ . 0,05 $Al_20_3$ . 1,42 . $SiO_2$ gekennzeichnet ist. Die Röntgenstrukturanalyse läßt saponitartige Anteile erkennen. In seiner Zusammensetzung weicht dieses erfindungsgemäße Produkt jedoch deutlich von Saponit ab. Für diesen wird bekanntlich in der Literatur

(Kirk-Othmer 1979, Vol. 6, 198) die Formel

$Mg_{3.00}$ [ $Al_{0.33}$ $(Na_{0.33})$ $Si_{3.67}$ ] $O_{10}$ $(OH)_2$

angegeben. Bezogen auf die zuvor genannte oxidische Formel errechnen sich daraus für die relativen Molzahlen die folgenden Werte, die in der nachfolgenden Zusammenstellung mit dem hier diskutierten speziellen Beispiel für die erfindungsgemäßen Schichtsilikate verglichen sind:

| | Saponit | erfindungsgemäßes Produkt |
|---|---|---|
| a | 0.055 | 0.25 |
| b | 0.055 | 0.05 |
| c | 1.22 | 1.42 |

Als synthetische Smectite im Sinne der Erfindung kommen auf Grund der gewählten chemischen Zusammensetzung saponit- und hectoritähnliche Phasen in Frage. Das Mischkristallsystem sollte demnach mit der Strukturformel

$$[\ Na_{x+y}\ (Mg_{3-x}Li_x)\ (Si_{4-y}Al_y)O_{10}(OH)_2].\ m\ [\ Na_2Si_zO_{2z+1}]\ .\ nH_2O$$

zu beschreiben sein, wobei der erste Formelteil den Smectit und der zweite das Natriumpolysilikat charakterisiert. Beide Komponenten bilden eine Phase, in-der der Smectit strukturbestimmend ist.

Die Variablen können dabei folgende Zahlenwerte annehmen:

| | | | | | | | | |
|---|---|---|---|---|---|---|---|---|
| x | = | 0 | bis | 0.3 | bevorzugt: | 0 | bis | 0.1 |
| y | = | 0 | bis | 0.5 | | 0 | bis | 0.4 |
| x+y | = | 0.1 | bis | 0.5 | | 0.2 | bis | 0.4 |
| z | = | 1 | bis | 22 | | 1 | bis | 14 |
| m | = | 0.1 | bis | 0.5 | | 0.1 | bis | 0.3 |
| n | = | 0 | bis | 8 | | 2 | bis | 6 |

Die von den reinen Smectiten deutlich abweichende Zusammensetzung der erfindungsgemäßen synthetischen Schichtsilikate und die damit im Zusammenhang stehende Fehlordnung im Kristallverbund führt zu Veränderungen in einer Reihe von für Schichtsilikate an sich typischen Eigenschaften, insbesondere bezüglich der Quellfähigkeit und damit den Gelbildungseigenschaften, aber auch im Austauschvermögen.

Die erfindungsgemäßen Schichtsilikate zeichnen sich durch vergleichsweise hohe Alkalioxidgehalte aus. Diese Gehalte sind jedoch - im sauber gewaschenen Material - nicht durch freies Alkali bedingt. Sie lassen sich durch weiteres Auswaschen mit Wasser nicht reduzieren. Die Natriumionen sind nur zum Teil gegen andere Ionen austauschbar. Zur Bestimmung des Austauschvermögens, vergleiche beispielsweise die von Grimshaw in "The Chemistry and Physics of Clays" 264 - 265, E. Benn Ltd., London (1971) beschriebenen Methoden. In den für die Verwendung in Wasch- und Reinigungsmitteln besonders geeigneten synthetischen Schichtsilikaten im erfindungsgemäßen Sinne werden gegebenenfalls weniger als die Hälfte der insgesamt vorhandenen Natriumionen gegen Ammoniumionen ausgetauscht. Die Austauschkapazität dieser Schichtsilikate der Erfindung liegt damit unter der von natürlichen Saponiten und anderen Smectiten, wenn auch durchaus noch ein an sich beachtliches Austauschvermögen festzustellen ist.

Bedeutungsvoller sind für die Definition der erfindungsgemäßen Schichtsilikate die Veränderungen in den Gelbildungseigenschaften. Durch die Mischkristallbildung wird gegenüber den natürlichen und synthetischen Smectiten (Bentonit, Hectorit, Saponit) ein anderes Eigenschaftbild erzeugt. Die erfindungsgemäßen Schichtsilikate quellen nicht oder nur sehr wenig. Sie können daher beispielsweise keine langkettigen Tenside - zum Beispiel Reste von kationischen oder nichtionischen Tensiden - einlagern und auch keine Gele bilden, wie es für die genannten reinen Smectite bekannt ist. Diese Funktionen werden durch den Einbau der Natriumpolysilikate blockiert. Dagegen bleibt das Kationenaustauschvermögen für kleine Ionen (zum Beispiel $Mg^{2+}$, $Ca^{2+}$, $NH_4^+$) - soweit es überhaupt vorhanden ist - weitgehend erhalten.

Zur Bestimmung der Gelbildungseigenschaften wurde ein Sedimentationstest entwickelt, der durch vorgeschaltete Aufbereitungsmaßnahmen andere Einflüsse als die Struktureinflüsse auf die Gelbildung ausschließt. Solche unerwünschten Einflüsse sind entweder zu hohe Elektrolytgehalte - das heißt anhaftende, nicht abgetrennte Fremdsalze - oder eine nicht ausreichende Aktivierung mit Na-Ionen.

Die Beurteilung der Gelbildungseigenschaften eines vorgegebenen Materials ist mittels des nachfolgend beschriebenen Sedimentationstestes möglich, der schrittweise auch die zuvor beschriebenen Fehlerquellen ausschaltet.

Sedimentationstest

a) In einem Becher werden 90 ml Leitungswasser mit 16 °dH vorgelegt und unter kräftigem Rühren 10 g Schichtsilikat in kleinen Portionen eingetragen. Danach wird 15 min lang bei Raumtemperatur gerührt. Die Suspension wird danach in einen Meßzylinder gefüllt und stehengelassen. Während der Standzeit wird der Meßzylinder mit einer Folie abgedeckt. Nach 20 h wird der Quotient aus dem Sedimentvolumen $V_s$ und Gesamtvolumen V ermittelt.

Geräte:

| | |
|---|---|
| Becher: | 250 ml, Durchmesser 70 mm |
| Rührer: | dreiflügeliger Propellerrührer, Durchmesser 50 mm, Drehzahl 700-1000 $min^{-1}$ |
| Meßzylinder: | 100 ml Glasmeßzylinder nach DIN |

b) Bei einem Sedimentationsquotienten $V_s/V$ kleiner als 0.8 wird das Schichtsilikat vor erneuter Prüfung nach a) wie folgt vorbehandelt:
20 g des Schichtsilikats werden in 500 ml entionisiertem Wasser unter Rühren 15 min lang dispergiert. Die Suspension wird anschließend über ein Papierfilter abfiltriert und der Filterrückstand zweimal mit 50 ml entionisiertem Wasser gewaschen. Das Schichtsilikat aus dem Filterrückstand wird bei 125 °C 2 Stunden lang getrocknet, danach in einer Reibschale verrieben und wie unter a) beschrieben, geprüft.

c) Wird nach der Vorbehandlung gemäß b) wiederum ein Sedimentationsquotient von $V_s/V$ kleiner als 0.8 gefunden, so erfolgt eine weitere Vorbehandlung:
15 g des Schichtsilikats werden in 500 ml entionisiertem Wasser dispergiert und nach Zugabe von 5 g Soda 30 min lang intensiv gerührt. Die Abtrennung und Aufbereitung des Schichtsilikats wird, wie unter b) beschrieben, durchgeführt.

Beurteilung:

| $V_s/V$ | nach 20 Stunden |
|---|---|
| 1.0 | stabiles Gel |
| 1.0 bis 0.8 | instabiles Gel |
| 0.6 bis 0.8 | Sedimentbildung |
| < 0.6 | starke Sedimentbildung |

$V_s$ = Sedimentvolumen (schichtsilikat-haltig)
V = Gesamtvolumen

Die erfindungsgemäßen Schichtsilikate sind unter anderem dadurch gekennzeichnet, daß sie ein beschränktes Quellvermögen in Wasser (16 °dH und Raumtemperatur) - von kleiner als 0.4 besitzen. Die Bestimmung des Quotienten $V_s/V$ erfolgt dementsprechend im Kurzverfahren gemäß den vorbeschriebenen Arbeitsschritten a) bis c), jedoch in umgekehrter Reihenfolge, ohne Ermittlung der zwischenzeitlich auftretenden entsprechenden Volumenquotienten. Lediglich in der abschließenden Ermittlung gemäß a) werden nach Aufschlämmung von 10 g Schichtsilikat in 90 ml Wasser mit 16 °dH und Raumtemperatur nach 20 Stunden Stehen das Sedimentvolumen $V_s$ bestimmt und der Quotient $V_s/V$ errechnet.

In der nachfolgenden Tabelle sind Werte für die jeweils ermittelten Quotienten $V_s/V$ an natürlichen und synthetischen beziehungsweise modifizierten natürlichen Smectiten mit entsprechenden Werten für Produkte der Erfindung zusammengestellt.

Sedimentationsverhalten von Schichtsilikatsuspensionen

| Schichtsilikat | Vorbehandlung | $V_s/V$ (nach 20 h) |
|---|---|---|
| natürliche Smectite: | | |
| Aktiv-Bentonit B[1)] | - | 1.0 |
| Ca-Bentonit [1)] | - | 0.42 |
| Ca-Bentonit [1)] | c | 1.0 |
| Dis-Thix-Extra[2)] | - | 1.0 |
| Bentonit A[1)] | b | 1.0 |
| synthetische Smectite: | | |
| Laponite RD[3)] | - | 1.0 |
| Hectorit, $Na_2SO_4$-haltig | - | 0.72 |
| Hectorit | b | 1.0 |
| erfg. Produkt 5, $Na_2SO_4$-haltig | - | 0.20 |
| erfg. Produkt 5 | b | 0.25 |
| erfg. Produkt 5[4)] | - | 0.23 |
| erfg. Produkt 8[4)] | - | 0.27 |
| erfg. Produkt 18[4)] | - | 0.39 |
| erfg. Produkt 19[4)] | - | 0.23 |

1) Handelsprodukt der Fa. Erbslöh, Geisenheim/Rh.

2) Handelsprodukt der Fa. Schwegmann, Bonn

3) Handelsprodukt der Fa. Laporte Ind., England

4) elektrolytfrei gewaschen

In den Rahmen der Erfindung fallen nicht nur die von Fremdsalzen und Alkaliüberschuß befreiten Schichtsilikate der zuvor gegebenen Definition. Für wichtige Ausführungsformen der Erfindung kann es im Gegenteil bevorzugt sein, daß die synthetischen, mischkristallinen, feinteiligen Materialien überschüssiges Alkali, das nicht in die Kristallstruktur eingebunden ist, enthalten und/oder in inniger Abmischung mit insbesondere wasserlöslichen Salzen vorliegen. Überschüssiges Alkali kann insbesondere Natriumhydroxid sein. Die gegebenenfalls in Abmischung vorliegenden wasserlöslichen Salze sind bevorzugt aus dem Herstellungsverfahren der neuen Schichtsilikate entstanden und dadurch zugegen. Hierbei kann es sich insbesondere um Alkalisulfate und/oder Alkalicarbonate handeln. Vorteile, die sich für den Einsatz solcher

Stoffgemische ergeben, werden im nachfolgenden noch geschildert.

Die Herstellung der erfindungsgemäßen Schichtsilikate

Die Synthese von Schichtsilikaten, insbesondere von Hectoriten, ist in der Literatur vielfach beschrieben worden (H. Strese und U. Hoffmann, Z.Anorg.Allg.Chem. 247 (1941) 65-95; W.I. Grandquist und S.S. Pollack in "Clays and Clay Minerals" Natl. Acad. Sci., Natl. Res. Council Publ. 8 (1960) 150 - 169; DE-AS 1667502). Zur Herstellung der erfindungsgemäßen synthetischen, feinteiligen, wasserunlöslichen Schichtsilikate mit smectitähnlicher Kristallphase werden Natriumsilikatlösungen zusammen mit Oxiden, Hydroxiden und/oder wasserlöslichen Salzen von Magnesium sowie Aluminium und/oder Lithium in den Molverhältnissen des zu synthetisierenden mischkristallinen Schichtsilikates in wäßriger Lösung bzw. Aufschlämmung einer hydrothermalen Behandlung unterworfen. Vorzugsweise wird dabei in Gegenwart eines Alkaliüberschusses gearbeitet und insbesondere Natronlauge und/oder Soda als Überschußalkali eingesetzt. Vor der hydrothermalen Behandlung wird unter starkem Rühren ein Vorgemisch aus den einzelnen Komponenten hergestellt. Dieses kann in einem separaten Ansatzbehälter oder direkt im Autoklaven erfolgen. Es hat sich als vorteilhaft erwiesen, eine wäßrige Magnesiumsalzlösung, zum Beispiel eine Magnesiumsulfat,- chlorid oder-hydroxidlösung, vorzulegen und in diese eine Wasserglaslösung, in der das Molverhältnis $Si0_2$ : $Na_20$ zwischen etwa 2,0 und etwa 3,7 liegt, einzurühren. Zuletzt werden Natronlauge und/oder Soda sowie Natriumaluminat - und / oder Lithiumsalzlösung zugesetzt. Die Lithium- und Aluminiumsalzlösungen können auch in fester Form zum Beispiel als Lithiumhydroxid, Lithiumcarbonat und Hydrargillit zugegeben werden. Es bildet sich eine feinteilige Suspension, deren Viskosität mit steigendem Feststoffgehalt zunimmt. Die nachfolgende hydrothermale Umsetzung des Reaktionsgemisches erfolgt im Autoklaven unter Rühren bei 150 - 250 °C, vorzugsweise bei 170 - 200 °C, bei einem der Reaktionstemperatur entsprechendem Gleichgewichtsdampfdruck. Die Reaktionszeit liegt zwischen 1 und 20 Stunden, vorzugsweise zwischen 2 und 8 Stunden. Reaktionstemperaturen zwischen 170 und 190 °C mit Reaktionszeiten zwischen 4 und 6 Stunden werden beim hydrothermalen Prozeß besonders bevorzugt.

Gelbildung, Quellfähigkeit und Kationenaustauschvermögen der erfindungsgemäßen Schichtsilikate werden neben den Kristallisationsbedingungen im wesentlichen durch den Ansatz bestimmt. Nichtgelbildende Schichtsilikate können bei $SiO_2$/MgO-Molverhältnissen von 1,2 bis 2,0 hergestellt werden. Mit zunehmendem $SiO_2$/MgO-Verhältnis ist der $Na_2O$-Gehalt zu erhöhen, um eine gute Kristallisation zu gewährleisten. Bevorzugt werden Schichtsilikate mit Molverhältnissen im Ansatz von $SiO_2$/MgO = 1,4 bis 1,7 und $Na_2O$/MgO = 1,2 bis 1,4.

Das optimale $Na_2O$/MgO-Verhältnis wird durch Variation der Natronlaugezugabe und Kontrolle des pH-Wertes ermittelt. Nach der Reaktion soll der pH-Wert in der Mutterlauge wenigstens 12 betragen und vorzugsweise zwischen 12,5 und 13,0 liegen. Die Kristallisation wird somit stets bei $Na_2O$-Überschuß durchgeführt. Bei $SiO_2$/MgO-Verhältnissen größer 1,4 und $Na_2O$/MgO - Verhältnissen größer 1,3 bleibt ein geringer Anteil an Silikat In der Mutterlauge gelöst. Dieser Anteil kann etwa 3 bis 6 % des eingesetzten Silikates betragen, so daß die gebildeten Schichtsilikate gegenüber dem Ansatz ein um diesen Anteil verrringertes $SiO_2$/MgO-Verhältnis besitzen.

Das Kationenaustauschvermögen ist vom Aluminiumoxid- und Lithiumoxidgehalt abhängig: je größer deren Gehalt im Schichtsilikat ist um so größer ist das Austauschvermögen. Das $Al_2O_3$/MgO-Molverhältnis im Ansatz soll 0,3 nicht überschreiten. Diese Begrenzung ist notwendig, um die Bildung von Sodalith und Zeolithen, insbesondere Zeolith P, zu unterdrücken. Bei der Verwendung der erfindungsgemäßen Schichtsilikate in Waschmitteln stören geringe Anteile dieser Kristallphasen jedoch nicht.

Für die Aufbereitung der erfindungsgemäßen Schichtsilikate bestehen folgende Möglichkeiten:

a) Das Gemisch der Reaktionsprodukte aus Feststoff und Mutterlauge wird ohne Abtrennung getrocknet. Das Endprodukt enthält dann neben Schichtsilikat vor allem Natriumsulfat, gegebenenfalls Soda, freies $Na_2O$ sowie kleinere Anteile an löslichem Natriumsilikat und gegebenenfalls geringe Mengen an $Li_2O$.

b) Nachdem ein Teil der Mutterlauge zum Beispiel durch Filtrieren oder Zentrifugieren abgetrennt worden ist, wird der Rückstand getrocknet. Im Produkt kommen die unter a) aufgeführten Bestandteile vor. Allerdings ist der Anteil an wasserlöslichen Bestandteilen geringer.

c) Nach Abtrennen der Mutterlauge, z.B. durch Filtrieren oder Zentrifugieren wird der Rückstand gründlich gewaschen und anschließend getrocknet. Es bleibt das Schichtsilikat zurück, das gegebenenfalls noch Sodalith oder Zeolithe enthält.

d) Das Gemisch der Reaktionsprodukte wird vor der Weiterverarbeitung als Suspension gelagert.

Die nach a), b) oder d) aufbereiteten erfindungsgemäßen Schichtsilikate sind zur Verwendung als Waschmittelrohstoff in Wasch-und Reinigungsmitteln, insbesondere Textilwaschmitteln besonders geeignet, da der vorhandene Alkaligehalt andere alkalische Komponenten in der Waschmittelrezeptur einspart und

sich der Natriumsulfatgehalt vorteilhaft auf die Dispergierfähigkeit des erfindungsgemäßen Schichtsilikates in der Waschflotte auswirkt. Die während der Aufarbeitung nach b) abgetrennte Mutterlauge kann als Waschalkali in dar Waschmittel eingebracht werden. Sofern nach d) aufbereitete erfindungsgemäße Schichtsilikate in Waschmitteln Verwendung finden, werden möglichst hohe Feststoffgehalte im Ansatz bevorzugt. Bezogen auf die wasserfreie Formel

$MgO . a M_20 . b Al_20_3 . c Si0_2$

worin M Natrium oder eine Mischung aus Natrium und Lithium bedeutet und a, b und c eine Zahl in den oben genannten Bereichen darstellt, enthalten die Ansätze 50 bis 100 Mole $H_20$. Geringere Wasseranteile erfordern während der hydrothermalen Behandlung ein intensives Rühren des Reaktionsgemisches, da die Viskosität zunächst stark ansteigt. Nach erfolgter Kristallisation sinkt auch bei höheren Feststoffgehalten die Viskosität soweit, daß für die Weiterverarbeitung des Reaktionsgemisches keine Problene bestehen.

Die Charakterisierung der erfindungsgemäßen Schichtsilikate mit smectitähnlicher Kristallphase erfolgt nach Abtrennung nach c).

<u>Die Verwendung der erfindungsgemäßen Schichtsilikate</u>

Die neuen mischkristallinen Schichtsilikate sind überraschenderweise besonders befähigt, sowohl das Primärwaschverhalten als auch das Sekundärwaschverhalten von STP-armen und STP-freien Wasch- und Reinigungsmitteln - insbesondere Textilwaschmittel - positiv zu beeinflussen bzw. zu verbessern. Besonders geeignet sind die neuen Schichtsilikate als Mischungsbestandteile für Systeme auf Basis von Zeolithen, insbesondere auf Basis von Zeolith NaA als Hauptbuilder-Bestandteil .

Die erfindungsgemäßen nichtquellenden Schichtsilikate können die eingangs genannten Co-Builder-Komponenten NTA und/oder HEDP teilweise oder vollständig ersetzen, gleichwohl werden hohe Aufhellungswerte bei einmaliger Wäsche und äußerst geringe Inkrustationswerte nach wiederholter Wäsche mit den entsprechenden Waschmitteln festgestellt.

Überraschenderweise wird in Gegenwart der erfindungsgemäßen Schichtsilikate mit reduziertem Quellvermögen auch das Primär-und Sekundärwaschverhalten solcher Wasch-und Reinigungsmittel, insbesondere Textilwaschmittel, signifikant verbessert, die Zeolith-frei sind und einen reduzierten Phosphatgehalt z.B. zwischen etwa 20 und etwa 25 Gew.% - bezogen auf das Waschmittel-Gesamtgewicht - besitzen.

Der Einsatz der erfindungsgemäßen Schichtsilikate kann in verschiedenartigster Weise erfolgen:

Die isolierten und durch Waschen gereinigten, von wasserlöslichen Anteilen befreiten Reaktionsprodukte der hydrothermalen Reaktion können als solche eingesetzt werden. Eine solche arbeitsaufwendige Reinigung der Produkte ist aber nicht notwendig, in bestimmten Ausführungsformen der Erfindung nicht einmal wünschenswert. So ist es möglich, die einfach durch Filtrieren oder Zentrifugieren erhaltenen Filterkuchen des Produktes aus dem hydrothermalen Reaktionsprozeß als Co-Builder-Komponenten in das Waschmittelgemisch einzusetzen. Schließlich ist es aber auch möglich, das gesamte Reaktionsprodukt aus der Verfahrensstufe der hydrothermalen Herstellung der erfindungsgemäßen Schichtsilikatedas heißt diese Reaktionsprodukte zusammen mit der Mutterlauge aus ihrem Herstellungsverfahren - in das Waschmittel einzubringen.

Es können sich mit solchen Variationen wichtige Vorteile für die Waschmittelherstellung beziehungsweise für das Verhalten der erfindungsgemäßen Schichtsilikate im Waschprozeß ergeben.

So kann bei der Herstellung der erfindungsgemäßen Schichtsilikate eingesetztes überschüssiges Alkali unmittelbar als Waschalkali in das Waschmittel eingebracht werden und damit dessen getrennte Zugabe überflüssig machen. Gleichzeitig wird durch einen solchen Alkaliüberschuß die Kristallisation der Schichtsilikate im Verfahren ihrer hydrothermalen Herstellung beschleunigt. Entstehen die unlöslichen Schichtsilikate bei ihrer Herstellung in Abmischung mit anderen Reaktionssalzen, dann kann die gemeinsame Verwendung solcher gemischten Reaktionsprodukte von Vorteil sein. Begleitende Reaktionssalze können inbesondere Sulfate und/oder Carbonate sein, die durch geeignete Wahl der Ausgangskomponenten für die Herstellung der erfindungsgemäßen Schichtsilikate als Reaktionsnebenprodukte anfallen. So kann beispielsweise Natriumsulfat und/oder Natriumcarbonat in inniger Abmischung mit den unlöslichen Schichtsilikaten vorliegen. In einer wichtigen Ausführungsform der Erfindung empfiehlt sich der unmittelbare Einsatz dieses Stoffgemisches. Hierdurch wird die Dispergierung der unlöslichen Reaktionsbestandteile in der Waschflotte letztlich beträchtlich erleichtert.

Die erfindungsgemäßen Schichtsilikate mit deutlich verringertem Quellvermögen sind in Wasch-und Reinigungsmitteln, insbesondere Textilwaschmitteln, vorzugsweise in Mengen von etwa 5 bis etwa 20 Gew.% - bezogen auf das Waschmittel-Gesamtgewicht - enthalten.

Die Builderbestandteile, die zusammen mit den erfindungsgemäßen Schichtsilikaten in Wasch-und Reinigungsmitteln enthalten sein können, werden im folgendem näher beschrieben:

Als organische und anorganische Buildersubstanzen eignen sich schwachsauer,neutral oder alkalisch reagierende Salze, insbesondere Alkalisalze,die in der Lage sind,Calciumionen auszufällen oder komplex zu binden. Von den anorganischen Salzen sind die wasserlöslichen Alkalimeta - oder Alkali-Polyphosphate, insbesondere das Pentanatriumtriphosphat, neben den Alkaliortho- und Alkalipyrophosphaten von besonderer Bedeutung. Diese Phosphate können ganz oder teilweise durch organische Komplexbildner für Calciumionen ersetzt werden. Dazu gehören Verbindungen vom Typ der Aminopolycarbonsäuren wie zum Beispiel Nitrilotriessigsäure (NTA), Ethylendiamintetraessigsäure, Diethylentriaminpentaessigsäure sowie höhere Homologe. Geeignete phosphorhaltige organische Komplexbildner sind die wasserlöslichen Salze der Alkanpolyphosphonsäuren,Amino-und Hydroxyalkanpolyphosphonsäuren und Phosphonopolycarbonsäuren wie zum Beispiel Methandiphosphonsäure, Dimethylaminomethan-1,1-diphosphonsäure, Aminotrimethylentriphosphonsäure, 1-Hydroxyethan-1,1-diphosphonsäure, 1-Phosphonoethan-1,2-dicarbonsäure, 2-Phosphonobutan-1,2,4-tricarbonsäure.

Unter den organischen Gerüstsubstanzen sind die Stickstoff- und Phosphor-freien, mit Calciumionen Komplexsalze bildenden Polycarbonsäuren, wozu auch Carboxylgruppen enthaltende Polymerisate zählen,von besonderer Bedeutung. Geeignet sind zum Beispiel Zitronensäure, Weinsäure, Benzolhexacarbonsäure und Tetrahydrofurantetracarbonsäure. Auch Ethergruppen enthaltende Polycarbonsäuren sind geeignet wie 2,2'-Oxydibernsteinsäure sowie mit Glykolsäure teilweise oder vollständig veretherte mehrwertige Alkohole oder Hydroxycarbonsäuren,zum Beispiel Biscarboxymethylethylenglykol, Carboxymethyloxybernsteinsäure, Carboxymethyltartronsäure und carboxymethylierte bzw. oxydierte Polysaccharide. Weiterhin eignen sich polymere Carbonsäuren mit einem Molekulargewicht zwischen 350 und etwa 1 500 000 in Form wasserlöslicher Salze. Besonders bevorzugte polymere Polycarboxylate haben ein Molekulargewicht im Bereich von 500 bis 175 000 und insbesondere im Bereich von 10 000 bis 100 000. Zu diesen Verbindungen gehören beispielsweise Polyacrylsäure, Poly- $\alpha$ -Hydroxyacrylsäure, Polymaleinsäure sowie die Copolymerisate der entsprechenden monomeren Carbonsäuren untereinander oder mit ethylenisch ungesättigten Verbindungen wie Vinylmethylether. Geeignet sind weiterhin die wasserlöslichen Salze der Polyglyoxylsäure. Als wasserunlösliche anorganische Gerüstsubstanzen eignen sich die in der DE-OS 24 12 837 als Phosphatsubstitute für Wasch-und Reinigungsmittel näher beschriebenen feinteiligen, synthetischen, gebundenes Wasser enthaltenen Natriumalumosilikate vom Zeolith-A-Typ.

Die kationen-austauschenden Natriumalumosilikate kommen in der üblichen hydratisierten, feinkristallinen Form zum Einsatz, daß heißt sie weisen praktisch keine Teilchen größer als 30 $\mu$m auf und bestehen vorzugsweise zu wenigstens 80% aus Teilchen einer Größe kleiner als 10 $\mu$m. Ihr Calciumbindevermögen, das nach den Angaben der DE-OS 24 12 837 bestimmt wird, liegt im Bereich von 100 bis 200 mg CaO/g. Geeignet ist insbesondere der Zeolith NaA, ferner auch der Zeolith NaX und Mischungen aus NaA und Max.

Geeignete anorganische, nicht komplexbildende Salze sind die - auch als " Waschalkalien" bezeichneten - Alkalisalze der Bicarbonate, Carbonate, Borate, Sulfate und Silikate. Von den Alkalisilikaten sind die Natriumsilikate, in denen das Verhältnis $Na_20$ : $Si0_2$ zwischen 1 : 1 und 1 : 3,5 liegt, besonders bevorzugt. Weitere Gerüstsubstanzen,die wegen ihrer hydrotropen Eigenschaften meist in flüssigen Mitteln eingesetzt werden, sind die Salze der nichtkapilaraktiven 2 bis 9 Kohlenstoffatome enthaltenden Sulfonsäuren, Carbonsäuren und Sulfocarbonsäuren,beispielsweise die Alkalisalze der Alkan-, Benzol-, Toluol-, Xylol-oder Cumolsulfonsäuren, der Sulfobenzoesäuren, Sulfophthalsäure,Sulfoessigsäure, Sulfobernsteinsäure sowie die Salze der Essigsäure oder der Milchsäure. Als Lösungsvermittler sind auch Acetamid und Harnstoffe geeignet.

Tenside, die als weitere essentielle Komponente in Wasch- und Reinigungsmitteln enthalten sind, besitzen im Molekül wenigstens einen hydrophoben organischen Rest und eine wasserlöslich machende anionische, zwitterionische oder nichtionische Gruppe. Bei dem hydrophoben Rest handelt es sich meist um einen aliphatischen Kohlenwasserstoffrest mit 8 - 26, vorzugsweise 10 - 22 und insbesondere 12 - 18 C-Atomen oder um einen alkylaromatischen Rest mit 6 - 18, vorzugsweise 8 - 16 aliphatischen C-Atomen.

Als anionische Tenside sind z.B. Seifen aus natürlichen oder synthetischen, vorzugsweise gesättigten Fettsäuren, gegebenenfalls auch aus Harz- oder Naphthensäuren brauchbar. Geeignete synthetische anionische Tenside sind solche vom Typ der Sulfonate, Sulfonate und der synthetischen Carboxylate.

Als Tenside vom Sulfonattyp kommen Alkylbenzolsulfonate ($C_{9-15}$-Alkyl), Olefinsulfonate, d.h.Gemische aus Alken- und Hydroxyalkansulfonaten sowie Disulfonaten, wie man sie beispielsweise aus $C_{12}$-$C_{18}$-Monoolefinen mit end- oder innenständiger Doppelbindung durch Sulfonieren mit gasförmigem Schwefeltrioxid und anschließende alkalische oder saure Hydrolyse der Sulfonierungsprodukte erhält, in Betracht. Geeignet sind auch die Alkansulfonate, die aus $C_{12}$-$C_{18}$-Alkanen durch Sulfochlorierung oder Sulfoxydation und anschließende Hydrolyse bzw. Neutralisation bzw. durch Bisulfitaddition an Olefine erhältlich sind,

sowie die Ester von $\alpha$ -Sulfofettsäuren, z.B. die $\alpha$-sulfonierten Methyl- oder Ethylester der hydrierten Kokos-, Palmkern- oder Talgfettsäuren.

Geeignete Tenside vom Sulfattyp sind die Schwefelsäuremonoester aus primären Alkoholen natürlichen und synthetischen Ursprungs, d.h. aus Fettalkoholen, wie z.B. Kokosfettalkoholen, Talgfettalkoholen, Oleylalkohol, Lauryl-, Myristyl-, Palmityl- oder Stearylalkohol, oder den $C_{10}$-$C_{20}$-Oxoalkoholen, und diejenigen sekundären Alkohole dieser Kettenlänge. Auch die Schwefelsäuremonoester der mit 1 - 6 Mol Ethylenoxid ethoxylierten aliphatischen primären Alkohole bzw. ethoxylierten sekundären Alkohole bzw. Alkylphenole sind geeignet. Ferner eignen sich sulfatierte Fettsäurealkoholamide und sulfatierte Fettsäuremonoglyceride.

Weitere geeignete anionische Tenside sind die Fettsäureester bzw.- amide von Hydroxy- oder Aminocarbonsäuren bzw.- sulfonsäuren, wie z.B, die Fettsäuresarcoside, - glykolate, -lactate, -tauride oder -isethionate.

Die anionischen Tenside können in Form ihrer Natrium-, Kalium- und Ammoniumsalze sowie als lösliche Salze organischer Basen, wie Mono-, Di- oder Triethanolamin vorliegen.

Als nichtionische Tenside sind Anlagerungsprodukte von 1 - 40, vorzugsweise 2 - 20 Mol Ethylenoxid an 1 Mol einer Verbindung mit im wesentlichen 10 - 20 Kohlenstoffatomen aus der Gruppe der Alkohole, Alkylphenole, Fettsäuren, Fettamine, Fettsäureamide oder Alkansulfonamide verwendbar. Besonders wichtig sind die Anlagerungsprodukte von 8 - 20 Mol Ethylenoxid an primäre Alkohole, wie z.B. an Kokos- oder Talgfettalkohole, an Oleylalkohol, an Oxoalkohole, oder an sekundäre Alkohole mit 8 - 18, vorzugsweise 12 - 18 C-Atomen, sowie an Mono- oder Dialkylphenole mit 6 - 14 C-Atomen in den Alkylresten. Neben diesen wasserlöslichen Nonionics sind aber auch nicht bzw. nicht vollständig wasserlösliche Polyglykolether mit 2 - 7 Ethylenglykoletherresten im Molekül von Interesse, insbesondere, wenn sie zusammen mit wasserlöslichen nichtionischen oder anionischen Tensiden eingesetzt werden.

Weiterhin sind als nichtionische Tenside die wasserlöslichen, 20 - 250 Ethylenglykolethergruppen und 10 - 100 Propylenglykolethergruppen enthaltenden Anlagerungsprodukte von Ethylenoxid an Polypropylenglykol, Alkylendiamin-polypropylenglykol und an Alkylpolypropylenglykole mit 1 - 10 Kohlenstoffatomen in der Alkylkette brauchbar, in denen die Polypropylenglykolkette als hydrophober Rest fungiert. Auch nichtionische Tenside vom Typ der Aminoxide oder Sulfoxide sind verwendbar, beispielsweise die Verbindungen N-Kokos-alkyl-N, N-dimethylaminoxid, N-Hexadecyl-N, H-bis (2,3-dihydroxypropyl)-aminoxid, N-Tagalkyl-N, N-dihydroxyethylaminoxid.

Bei den zwitterionischen Tensiden handelt es sich bevorzugt um Derivate aliphatischer quartärer Ammoniumverbindungen, in denen einer der aliphatischen Reste aus einem $C_8$-$C_{18}$-Rest besteht und ein weiterer eine anionische,wasserlöslich machende Carboxy-, Sulfo- oder Sulfato-Gruppe enthält. Typische Vertreter derartiger oberflächenaktiver Betaine sind beispielsweise die Verbindungen 3-(N-Hexadecyl-N,N-dimethylammonio)-propansulfonat; 3-(N-Tagalkyl-N,N-dimethylammonio)-2-hydroxypropansulfonat; 3-(N-Hexadecyl-N, N-bis (2-hydroxyethyl)-ammonio)-2-hydroxypropylsulfat; 3)-(N-Kokosalkyl-N,N-bis(2,3-dihydroxypropyl)-ammonio)-propansulfonat; N-Tetradecyl-N,N-dimethyl-ammonioacetat; N-Hexadecyl-N,N-bis-(2,3-dihydroxypropyl)-ammonioacetat.

Das Schäumvermögen der Tenside läßt sich durch Kombination geeigneter Tensidtypen steigern oder verringern; eine Verringerung läßt sich ebenfälls durch Zusätze von nichttensidartigen organischen Substanzen erreichen. Ein verringertes Schäumvermögen, das beim Arbeiten in Maschinen erwünscht ist, erreicht man vielfach durch Kombination verschiedener Tensidtypen, z.B. von Sulfaten und/oder Sulfonaten mit nichtionischen Tensiden und/oder mit Seifen. Bei Seifen steigt die Schaumdämpfung mit dem Sättigungsgrad und der C-Zahl des Fettsäurerestes an; Seifen der gesättigten $C_{20-24}$-Fettsäuren eignen sich deshalb besonders als Schaumdämpfer.

Bei den nichttensidartigen Schauminhibitoren handelt es sich im allgemeinen um wasserunlösliche, meist aliphatische $C_8$-$C_{22}$-Kohlenstoffreste enthaltende Verbindungen. Geeignete nichttensidartige Schauminhibitoren sind z.B. die N-Alkylaminotriazine, d.h. Umsetzungsprodukte von 1 Mol Cyanurchlorid mit 2 - 3 Mol eines Mono-oder Dialkylamins mit im wesentlichen 8 - 18 C-Atomen im Alkylrest. Geeignet sind auch propoxylierte und/oder butoxylierte Aminotriazine, z.B. die Umsetzungsprodukte von 1 Mol Melamin mit 5 - 10 Mol Propylenoxid und zusätzlich 10 - 50 Mol Butylenoxid sowie die aliphatischen $C_{18}$-$C_{40}$-Ketone, wie z.B. Stearon, die Fettketone aus gehärteter Tranfettsäure oder Talgfettsäure , sowie ferner die Paraffine und Halogenparaffine mit Schmelzpunkten unterhalb 100°C und Silikonölemulsionen auf Basis polymerer siliciumorganischer Verbindungen.

Als weitere Komponente können die Wasch- und Reinigungsmittel Schmutzträger enthalten, die den von der Faser abgelösten Schmutz in der Flotte suspendiert halten und so das Vergrauen verhindern. Hierzu sind wasserlösliche Kolloide meist organischer Natur geeignet, wie beispielsweise die wasserlöslichen Salze polymerer Carbonsäuren, Leim, Gelantine, Salze von Ethercarbonsäuren oder Ethersulfonsäuren der Stärke oder der Cellulose oder Salze von sauren Schwefelsäureestern der Cellulose oder der Stärke.

Auch wasserlösliche, saure Gruppen enthaltende Polyamide sind für diesen Zweck geeignet. Weiterhin lassen sich lösliche Stärkepräparate und andere als die oben genannten Stärkeprodukte verwenden, wie z.B. abgebaute Stärke, Aldehydstärken usw.. Auch Polyvinylpyrrolidon ist brauchbar.

Unter den als Bleichmittel dienenden, in Wasser $H_2O_2$ liefernden Verbindungen haben das Natriumperborat-tetrahydrat ($NaBO_2$ . $H_2O_2$ . 3 $H_2O$) und das -monohydrat ($NaBO_2$ . $H_2O_2$) besondere Bedeutung. Es sind aber auch andere $H_2O_2$ liefernde Borate brauchbar, z.B. der Perborax $Na_2B_4O_7$ . 4 $H_2O_2$. Diese Verbindungen können teilweise oder vollständig durch andere Aktivsauerstoffträger, insbesondere durch Peroxyhydrate, wie Peroxycarbonate ($Na_2CO_3$ . 1,5 $H_2O_2$), Peroxypyrophosphate, Citratperhydrate, Harnstoff-$H_2O_2$- oder Melamin$H_2O_2$-Verbindungen sowie durch $H_2O_2$ liefernde persaure Salze, wie z.B. Caroate ($KHSO_5$), Perbenzoate oder Peroxyphthalate ersetzt werden.

Es empfiehlt sich, übliche wasserlösliche und/oder wasserunlösliche Stabilisatoren für die Peroxyverbindungen zusammen mit diesen in Mengen von 0,25 - 10 Gew.-% einzuarbeiten. Als wasserunlösliche Stabilisatoren, die vorzugsweise 0,5 - 8 Gew.% - bezogen auf die gesamte Waschmittelrezeptur - ausmachen, eignen sich die meist durch Fällung aus wäßrigen Lösungen erhaltenen Magnesiumsilikate. Als wasserlösliche Stabilisatoren, die vorzugsweise zusammen mit wasserunlöslichen vorhanden sind, eignen sich organische Schwermetallkomplexbildner, insbesondere solche vom Typ der oben beschriebenen Aminopolycarbonsäuren und Polyphosphonsäuren.

Um beim Waschen bei Temperaturen unterhalb 80°C, insbesondere im Bereich von 40 - 60°C eine befriedigende Bleichwirkung zu erreichen, werden bevorzugt aktivatorhaltige Bleichkomponenten in die Präparate eingearbeitet.

Als Aktivatoren für in Wasser $H_2O_2$ liefernde Perverbindungen dienen bestimmte, mit diesem $H_2O_2$ organische Persäuren bildende N-Acyl- bzw. O-Acyl-Verbindungen, insbesondere Acetyl-, Propionyl- oder Benzoylverbindungen, sowie Kohlensäure- bzw. Pyrokohlensäureester. Brauchbare Verbindungen sind unter anderen: N-diacylierte und N,N'-tetraacylierte Amine wie z.B. N,N,N',N'-Tetraacetyl-methylendiamin bzw. -ethylendiamin, N,N-Diacetylanilin und N,N-Diacetyl-p-toluidin bzw. 1,3-diacylierte Hydantoine, Alkyl-N-sulfonyl-carbonamide, z.B. N-Methyl-N-mesyl-acetamid, N-Methyl-N-mesyl-benzamid, N-Methyl-N-mesyl-p-nitrobenzamid, und N-Methyl-N-mesyl-p-methoxybenzamid, N-acylierte cyclische Hydrazide, acylierte Triazole oder Urazole wie z.B. das Monoacetylmaleinsäurehydrazid, O,N,N-trisubstituierte Hydroxylamine wie z.B. O-Benzoyl-N,N-succinyl-hydroxylamin, O-Acetyl-N,N-succinylhydroxylamin,O-p-Methoxybenzoyl-N,N-succinyl-hydroxylamin, O-p-Nitrobenzoyl-N,N-succinylhydroxylamin und O,N,N-Triacetyl-hydroxylamin, N,N'-Diacyl-sulfurylamide, wie z.B. N,N'-Dimethyl-N,N'-diacetyl-sulfurylamid, und N,N'-Diethyl-N,N'-dipropionyl-sulfurylamid, Triacylcyanurate, z.B. Triacetyl- oder Tribenzoylcyanurat, Carbonsäureanhydride, z.B. Benzoesäureanhydrid, m-Chlorbenzoesäureanhydrid, Phthalsäureanhydrid, 4-Chlorphthalsäureanhydrid, Zuckerester, wie z.B. Glucosepentaacetat, 1,3-Diacyl-4,5-diacyloxy-imidazolidine, beispielsweise die Verbindungen 1,3-Diformyl-4,5-diacetoxy-imidazolidin, 1,3-Diacetyl-4,5-diacetoxy-imidazolidin, 1,3-Diacetyl-4,5-dipropionyloxy-imidazolidin, acylierte Glykolurile, wie z.B. Tetrapropionyl-glykoluril oder Diacetyldibenzoylglykoluril, diacylierte 2,5-Diketopiperazine, wie z.B. 1,4-Diacetyl-2,5-diketopiperazin, 1,4-Dipropionyl-2,5-diketopiperazin, 1,4-Dipropionyl-3,6-dimethyl-2,5-diketopiperazin, Acetylierungs-bzw. Benzoylierungsprodukte von Propylendiharnstoff bzw. 2,2-Dimethyl-propylendiharnstoff (2,4,6,8-Tetraaza-bicyclo-(3,3,1)-nonan-3,7-dion bzw. dessen 9,9-Dimethylderivat), Natriumsalze der p-(Ethoxycarbonyloxy)-benzoesäure und p-(Propoxycarbonyloxy)-benzolsulfonsäure.

Die Waschmittel können als optische Aufheller für Baumwolle insbesondere Derivate der Diaminostilbendisulfonsäure bzw. deren Alkalimetallsalze enthalten. Geeignet sind z.B. Salze der 4,4'-Bis(2-anilino-4-morpholino-1,3,5-triazin-6-yl-amino)-stilben-2,2'-disulfonsäure oder gleichartig aufgebaute Verbindungen, die anstelle der Morpholinogruppe eine Diethanolaminogruppe, eine Methylaminogruppe oder eine 2-Methoxyethylaminogruppe tragen. Als Aufheller für Polyamidfasern kommen solche vom Typ der 1,3-Diaryl-2-pyrazoline in Frage, beispielsweise die Verbindung 1-(p-Sulfamoylphenyl)-3-(p-chlorphenyl)-2-pyrazolin sowie gleichartig aufgebaute Verbindungen, die anstelle der Sulfamoylgruppe z.B. die Methoxycarbonyl-, 2-Methoxyethoxycarbonyl-, die Acetylamino- oder die Vinylsulfonylgruppe tragen. Brauchbare Polyamidaufheller sind ferner die substituierten Aminocumarine, z.B. das 4-Methyl-7-dimethylamino- oder das 4-Methyl-7-diethylaminocumarin. Weiterhin sind als Polyamidaufheller die Verbindungen 1-(2-Benzimidazolyl)-2-(1-hydroxyethyl-2-benzinmidazolyl)-ethylen und 1-Ethyl-3-phenyl-7-diethylamino-carbostyril brauchbar. Als Aufheller für Polyester- und Polyamidfasern sind die Verbindungen 2,5-Di-(2-benzoxazolyl)-thiophen,2-(2-Benzoxazolyl)-naphtho[2,3-b]-thiophen und 1,2-Di-(5-methyl-2-benzoxazolyl)-ethylen geeignet. Weiterhin können Aufheller vom Typ des substituierten 4,4'-Distyryl-diphenyls anwesend sein; z.B. die Verbindung 4,4'-Bis-(4-chlor-3-sulfostyryl)-diphenyl. Auch Gemische der vorgenannten Aufheller können verwendet werden.

Als wasserlösliche organische Lösungsmittel eignen sich die niederen Alkohole, Etheralkohole, Glykole

oder Ketone mit 1 - 6 Kohlenstoffatomen, wie z.B. Methanol, Ethanol, Propanol, Isopropylalkohol, Ethylenglykol, Propylenglykol, Diethylenglykol, Methylglykol, Ethylglykol, Butylglykol oder Aceton und Methylethylketon.

Die Zusammensetzung fertig formulierter, bei Temperaturen im Bereich von etwa 30 bis 100°C wirksamer Wasch- und Reinigungsmittel, insbesondere Textilwaschmittel, mit einem Gehalt an erfindungsgemäßen Schichtsilikaten liegt im Bereich folgender allgemeiner Rezeptur:

| | |
|---|---|
| etwa 5 bis etwa 30 Gew.% | anionische und/oder nichtionische und/oder zwitterionische Tenside |
| 0 bis etwa 60 Gew.% | Alumosilikate |
| 0 bis etwa 30 Gew.% | Phosphate |

etwa

| | |
|---|---|
| 5 bis etwa 30 Gew.% | erfg. Schichtsilikate |
| 0 bis etwa 5 Gew.% | weitere Komplexbildner für Ca |
| 0 bis etwa 50 Gew.% | zur Komplexbildung nicht befähigte Gerüstsubstanzen |
| 0 bis etwa 50 Gew.% | Bleichmittel sowie sonstige, meist in geringen Mengen in Textilwaschmitteln vorhandene Zusatzstoffe |

Wasch- und Reinigungsmittel, insbesondere Textilwaschmittel, mit einem Gehalt an erfindungsgemäßem Schichtsilikat werden nach üblichen Standardverfahren, beispielsweise durch Sprühtrocknung, Sprühkühlung oder Granulation, hergestellt.

Sofern in den Beispielen nichts anderes angegeben ist, bezieht sich die %-Angabe immer auf Gew.%.

Beispiel 1

616 g Magnesiumsulfatheptahydrat wurden in 2 1 entionisiertem Wasser gelöst und unter kräftigem Rühren mit 755 g einer Natriumsilikatlösung umgesetzt, die 27 g $Si0_2$ und 8 g $Na_20$ in 100 g enthielt. Es bildete sich eine feinteilige Suspension. Dieser Suspension wurde unter weiterem Rühren eine Lösung aus 404 g einer 50%igen Natronlauge, 1,5 l entionisiertem Wasser und 20,2 g Hydrargillit, der 63 % $Al_20_3$ enthielt, zugegeben.

Die Suspension wurde anschließend in einem Rührautoklaven innerhalb von 20 min. auf 190°C aufgeheizt und 4 Std. lang bei dieser Temperatur gerührt. Nach Abkühlen auf 100°Cwurde der Rührautoklav entleert und das entstandene Schichtsilikat von der Mutterlauge abfiltriert. Der Filterkuchen wurde mit entionisiertem Wasser auf dem Filter so lange gewaschen,bis im Waschwasser kein Sulfat mehr nachgewiesen werden konnte. Anschließend wurde der Filterkuchen im Umlufttrockenschrank bei etwa 100°C getrocknet.

Die Analyse des erfindungsgemäßen Produktes 1 ergab folgende Zusammensetzung (in Gew.%):

MgO: 22,8%, $Na_20$ : 5,7%, $Al_20_3$ : 3,2%, $SiO_2$ : 46,8%, $H_20$: 21,2%.

Das Röntgenbeugungsdiagramm des Schichtsilikates zeigt breite Reflexe mit Maxima bei d (Å): 13,4; 4,5; 2,57 und 1,535.

Beispiel 2

Es wurde das im Beispiel 1 beschriebene Syntheseverfahren angewandt. Die Reaktionstemperatur lag wiederum bei 190°Cund die Reaktionsdauer bei 4 Stunden. Die Molverhältnisse im Ansatz wurden, wie in der Tabelle 1 angegeben, geändert. Die bei der Reaktion entstandenen Schichtsilikate wurden analog Beispiel 1 aufgearbeitet und nach dem Trocknen auf ihre Kristallphasen hin untersucht.

Tabelle 1

| erfindungsgemäßes Schichtsilikat | Molverhältnis im Ansatz | | | | | Kristallphasen |
|---|---|---|---|---|---|---|
| | $MgO$ | $Na_2O$ | $Al_2O_3$ | $SiO_2$ | $H_2O$ | |
| 2 | 1.0 | 1.35 | ----- | 1.35 | 100 | Schichtsilikat (mit geringer Kristallinität) |
| 3 | 1.0 | 1.15 | 0.15 | 1.70 | 100 | " " und sehr wenig Sodalith |
| 4 | 1.0 | 1.30 | 0.30 | 2.00 | 100 | " " und wenig Zeolith P |
| 1 | 1.0 | 1.40 | 0.05 | 1.35 | 100 | " " |

Beispiel 3

Die Herstellung weiterer Schichtsilikate erfolgte wie im Beispiel 1. Die Reaktionstemperatur lag bei 180°C. Die Reaktionsdauer wurde, wie in der Tabelle 2 aufgeführt, variiert. Es wurde im Ansatz mit höheren Feststoffkonzentrationen gearbeitet. Bei der Herstellung des erfindungsgemäßen Produktes 10 wurde ein

Drittel des Wassers durch die entsprechende Menge an Mutterlauge aus dem Reaktionsgemisch mit dem erfindungsgemäßen Produkt 9 ersetzt.

Nach Abtrennen der Mutterlauge wurde ein Teil des noch $Na_2SO_4$-haltigen Filterkuchens ohne Auswaschen getrocknet, ein anderer Teil sulfatfrei gewaschen und getrocknet. Nach röntgenographischen Untersuchungen bei allen diesen Proben bestand die kristalline Phase aus einem Schichtsilikat, dessen Strukturmerkmale denen glimmerartiger Schichtsilikate ähnlich war.

Die Analyse des ausgewaschenen und getrockneten erfindungsgemäßen Produktes 8 ergab folgende Zusammensetzung:

MgO : 22,8%, $Na_20$ : 8,5%, $Al_20_3$ : 2,8%, $SiO_2$ : 48,2%.

Tabelle 2

| erfindungsgemäßes Schichtsilikat | Molverhältnis im Ansatz | | | | | Reaktionsdauer | Molverhältnis im sulfathaltigen, getr. Filterkuchen | | | | | | $Na_2O$-Molgehalt im sulfatfreien, getr. Filterkuchen |
|---|---|---|---|---|---|---|---|---|---|---|---|---|---|
| | MgO | $Na_2O$ | $Al_2O_3$ | $SiO_2$ | $H_2O$ | t (h) | MgO | $Na_2O$ | $Al_2O_3$ | $SiO_2$ | $H_2O$ | $SO_3$ | |
| 5 | 1.0 | 1.4 | 0.05 | 1.5 | 50 | 4 | 1.0 | 0.71 | 0.048 | 1.44 | 1.95 | 0.39 | 0.32 |
| 6 | 1.0 | 1.4 | 0.15 | 1.5 | 50 | 4 | 1.0 | 0.80 | 0.140 | 1.44 | 1.86 | 0.38 | 0.42 |
| 7 | 1.0 | 1.4 | 0.05 | 1.35 | 50 | 4 | 1.0 | 0.67 | 0.050 | 1.28 | 1.29 | 0.37 | 0.30 |
| 8 | 1.0 | 1.4 | 0.05 | 1.5 | 50 | 6.5 | 1.0 | 0.79 | 0.052 | 1.42 | 1.35 | 0.29 | 0.25 |
| 9 | 1.0 | 1.4 | 0.05 | 1.5 | 50 | 2 | 1.0 | 0.79 | 0.048 | 1.45 | 1.51 | 0.42 | 0.37 |
| 10 | 1.0 | 1.4 | 0.05 | 1.5 | 50 | 4 | 1.0 | 0.90 | 0.050 | 1.45 | 1.78 | 0.56 | 0.34 |

Beispiel 4

Die Synthesen wurden analog Beispiel 3 durchgeführt. Die schichtsilikathaltigen Reaktionsgemische werden - mit Ausnahme des Reaktionsgemisches, daß das erfindungsgemäße Produkt 12 enthält - ohne

Abtrennen der Mutterlauge als Suspensionen in Waschmittelrezepturen eingearbeitet. Das Reaktionsgemisch mit dem erfindungsgemäßen Produkt 12 wird getrocknet und vor der Einarbeitung in Waschmittelrezepturen zur Verbesserung der Dispergierbarkeit mit Natriumalkylbenzolsulfonat (ABS) versetzt. Die Analyse ergab folgende Zusammensetzung:
53,1 Gew.% erfindungsgemäßes Schichtsilikat;
44,2 Gew.% $Na_2SO_4$;
3,8 Gew.% ABS.
Tabelle 3 enthält Zusammensetzungen und Reaktionsbedingungen der Ansätze.

Beispiel 5

Die Synthese des erfindungsgemäßen Schichtsilikates 17 wurde analog Beispiel 3 durchgeführt. Die Molverhältnisse im Ansatz sowie die Reaktionsbedingungen entsprechen dem erfindungsgemäßen Schichtsilikat 8 in Tabelle 2. Das Reaktionsgemisch wurde ohne Abtrennen der Mutterlauge getrocknet und in Waschmittelrezepturen eingearbeitet.

Tabelle 3

| erfindungsgemäßes Schichtsilikat | Molverhältnis im Ansatz | | | | | Reaktionsbedingungen | | |
|---|---|---|---|---|---|---|---|---|
| | MgO | $Na_2O$ | $Al_2O_3$ | $SiO_2$ | $H_2O$ | T (°C) | t (h) | pH-Wert |
| 11 | 1.0 | 1.4 | 0.05 | 1.5 | 50 | 180 | 4 | 12.9 |
| 12 | 1.0 | 1.4 | 0.05 | 1.4 | 50 | 180 | 4 | 12.7 |
| 13 | 1.0 | 1.4 | 0.05 | 1.5 | 50 | 180 | 6.5 | 12.9 |
| 14 | 1.0 | 1.4 | 0.05 | 1.5 | 50 | 180 | 6.5 | 12.9 |
| 15 | 1.0 | 1.35 | 0.05 | 1.5 | 50 | 180 | 6.5 | 12.7 |
| 16 | 1.0 | 1.3 | 0.05 | 1.5 | 50 | 180 | 6.5 | 12.6 |

Beispiel 6

Die Synthese des erfindungsgemäßen lithiumhaltigen Schichtsilikates 18 wurde nach dem im Beispiel 1 beschriebenen Verfahren durchgeführt. Anstelle des Hydrargillits wurde der Suspension Lithiumcarbonat

zugesetzt. Im folgenden ist das Molverhältnis im Ansatz sowie das Molverhältnis nach dem Auswaschen und Trocknen des Schichtsilikates angegeben.

| | MgO | $Na_2O$ | $Li_2O$ | $SiO_2$ | $H_2O$ |
|---|---|---|---|---|---|
| Molverhältnis im Ansatz | 1,0 | 1,2 | 0,04 | 1,5 | 100 |
| Molverhältnis nach dem Auswaschen und Trocknen | 1,0 | 0,15 | 0,03 | 1,49 | 1,0 |

Beispiel 7

37 kg Magnesiumsulfatheptahydrat wurden in einem Rührautoklaven bei 70 °C in etwa 50 l entionisiertem Wasser gelöst. Anschließend wurde unter starkem Rühren eine Mischung bestehend aus 50,4 kg Wasserglaslösung, die 27 g $SiO_2$ und 8 g $Na_2O$ in 100 g enthält, 23,2 kg 50 %ige Natronlauge und etwa 23 kg entionisiertes Wasser zugegeben. Es bildete sich eine zunächst dickflüssige Suspension. Zuletzt wurden 1,2 kg Hydrargillit, der 63 % $Al_2O_3$ enthielt, zugesetzt. Unter weiterem Rühren wurde die Suspension auf 180 °C aufgeheizt und 6 Stunden bei dieser Temperatur gehalten. Die Suspension wurde abgekühlt und durch Abdampfen von Wasser auf einen Feststoffgehalt von etwa 40 Gewichtsprozent eingestellt. Anschließend wurde mittels Heißluftzerstäubung getrocknet, wobei ein lockeres Pulver erhalten wurde.

Das erfindungsgemäße Schichtsilikat 19 besitzt folgende Produktkenndaten:

| | |
|---|---|
| Schüttdichte | 555 g/l |
| Glühverlust (800 °C; 1 h) | 12,2 % |
| Weißgrad (nach Berger) | 104 |
| Siebanalyse | 1,6 mm : 0 |
| | 0,8 mm : 0 |
| | 0,4 mm : 2 |
| | 0,2 mm : 60 |
| | 0,1 mm : 37 |
| | durch 0,1 mm : 1 |

Die Analyse einer Natriumsulfatfrei gewaschenen und getrockneten Probe des erfindungsgemäßen Schichtsilikates 19 ergab folgende Zusammensetzung (in Gewichtsprozent):

MgO : 25,5 %; $Na_2O$ : 6,2 %; $Al_2O_3$ : 3,2 %; $SiO_2$ : 51,8 %; $H_2O$ : 13,3 %.

Das Röntgenbeugungsdiagramm des erfindungsgemäßen Schichtsilikates 19 zeigt die für Smectite charakteristischen Reflexe.

Beispiel 8

An einigen der zuvor beschriebenen Schichtsilikate sowie an handelsüblichen natürlichen Schichtsilikaten wurden Messungen zur Austauschkapazität und zum Quellverhalten durchgeführt. Die Untersuchungen zum Quellverhalten sollten am Beispiel von quartären Ammoniumverbindungen zeigen, ob Tenside in die Schichtsilikate eingelagert werden. Als Maß wurde die Aufweitung des Schichtabstandes bei der Einlagerung von Cetyldimethylbenzylammoniumionen gewählt. Von den Schichtsilikaten wurden 5%ige wäßrige Suspensionen hergestellt. Die Suspensionen wurden auf 60°C aufgeheizt und unter kräftigem Rühren mit einer 35%igen Lösung von Cetyldimethylbenzylammoniumchlorid versetzt. Bezogen auf 100 g des lufttrokkenen Schichtsilikates wurden 0,12 Mole der quartären Ammoniumverbindung zugegeben. Danach wurde

noch 30 Min. bei 60°C gerührt. Das Schichtsilikat wurde abfiltriert , mit heißem Wasser sulfatfrei gewaschen und anschließend bei 75°C getrocknet. Der Schichtabstand wurde mit röntgenographischen Methoden bestmmt.

| Schichtsilikat | Austauschvermögen (meq/100g) | Schichtabstand nach Einlagerung (nm) |
|---|---|---|
| Syntheseprodukte: | | |
| 1 | 67 | |
| 5 | 57 | |
| 6 | 100 | < 2,0 |
| 7 | 67 | keine Aufweitung gegenüber der Na-Form |
| 8 | 67 | |
| 9 | 75 | |
| 10 | 54 | |
| 19 | 52 | |
| Bentonite: | | |
| Dis-Thix-Extra [1)] | 82 | 3,62 |
| Bentonit T [2)] | 65 | 3,47 |
| Aktiv-Bentonit B [3)] | 65 | |
| Bentonit A [3)] | 65 | |

1) Fa. Schwegmann, Bonn

2) Fa. Süd-Chemie, München

3) Fa. Erbslöh, Geisenheim/Rh.

Beispiel 9

Zur Bestimmung der Gelbildungseigenschaften wurden die sulfatfrei gewaschenen Schichtsilikate in Leitungswasser mit 16° dH dispergiert. Die Gelbildung wurde nach 2 Stunden durch Viskositätsmessungen nachgewiesen, die an homogenen, nicht abgesetzten Proben vorgenommen wurden. Die Messung erfolgte mit einem Brookfield-Viskosimeter mit Helipath-Stand bei 60 Umdrehungen/Minute (T = 20°C).

| Schichtsilikat | Schichtsilikat-Gehalt im Gel (Gew.%) | Viskosität (m Pa . s) |
|---|---|---|
| Syntheseprodukte: | | |
| 1, 5, 6, 7, 8, 9, 10, 18 | 10 | keine Gelbildung |
| Laponite RD[1] | 10 | festes Gel |
| " | 2 | 40 000 |
| Bentonite: | — | |
| Dis-Thix-Extra[2] | 10 | 50 000 |
| Bentonit T[3] | 10 | 8 800 |

1) Fa. Laporte Ind., London
2) Fa. Schwegmann, Bonn
3) Fa. Süd-Chemie, München

Beispiel 10

Es wurde eine phosphatfreie, Zeolith-haltige Textilwaschmittel-Rezeptur mit folgender Zusammensetzung hergestellt:

| | |
|---|---|
| Na-Alkylbenzolsulfonat | 9,0 % |
| Talgfettalkohol -14 EO | 2,0 % |
| Talgfettalkohol - 5 EO | 2,0 % |
| gehärtete Fischöl/gehärtete Rüböl (50:50)-fettsäure-Na-Salz | 3,4 % |
| Wasserglas | 2,5 % |
| Zeolith 4A | 35,0 % |
| Natriumsulfat | 13,4 % |
| Natriumperborat | 20,0 % |

Es wurden jeweils 10 Gew.% Schichtsilikat - bezogen auf die Waschmittelgesamtmenge - zugesetzt.

Die Waschversuche mit den Waschmitteln wurden an Baumwollgewebe in einer Modellwaschapparatur durchgeführt. Die Dosierung der Waschmittel betrug 7,5 g/l. Zur Messung der Inkrustation wurden 25 Wäschen bei einer Waschtemperatur von 90°C, einer Wasserhärte von 16°dH (Ca:Mg = 5:1) und einem Flottenverhältnis von 1:20 durchgeführt. Die Inkrustationsbestimmung erfolgte durch Veraschen des Gewebes. Die Ergebnisse der Versuche sind in der Tabelle 4 zusammengefaßt. Durch den Zusatz von Schichtsilikaten wird die Inkrustation nach 25 Wäschen verringert, wobei die erfindungsgemäßen Schichtsilikattypen besonders günstige Effekte aufweisen.

Die erfindungsgemäßen Produkte 8 und 18 werden in $Na_2SO_4$-freiem, trockenem Zustand in diese und die folgenden Waschmittelrezepturen eingearbeitet.

Tabelle 4: Inkrustation nach 25 Wäschen

| Zusatz | | Asche (%) |
|---|---|---|
| -- | ohne Zusatz | 4,8 |
| 10 % | synth. Hectorit Laponite RD 1) | 3,8 |
| 10 % | natürlicher Bentonit Dis-Thix-Extra 2) | 3,8 |
| 10 % | erfg. Produkt 8 | 3,1 |
| 10 % | erfg. Produkt 18 | 3,1 |

1) Fa. Laporte Ind., England

2) Fa. Schwegmann, Bonn

Beispiel 11

Zwei Waschmittel der nachfolgenden Zusammensetzungen wurden hergestellt:

| Rezepturbestandteil (%) \ Waschmittel | 11-1 | 11-2 |
|---|---|---|
| Na-Alkylbenzolsulfonat | 4,0 | 4,0 |
| Na-Talgfettalkoholsulfat | 4,0 | 4,0 |
| $C_{16-22}$-Fettsäure-Na-Salz | 0,8 | 0,8 |
| Talgfettalkohol-5EO | 0,8 | 0,8 |
| $C_{14-15}$-Oxoalkohol-7EO | 3,6 | 3,6 |
| Zeolith 4A | 25,0 | 25,0 |
| Laponite RD | 10,0 | - |
| erfg. Schichtsilikat 8 | - | 10,0 |
| Natriumsilikat | 2,75 | 2,75 |
| Magnesiumsilikat | 0,7 | 0,7 |
| Na-HEDP * | 0,8 | 0,8 |
| Na-Carbonat | 4,0 | 4,0 |
| Carboxymethyl-/Methylcellulose | 0,8 | 0,8 |
| Natriumperborat-tetrahydrat | 23,5 | 23,5 |
| Paraffin-Schauminhibitor | + | + |
| Enzym | + | + |
| Wasser/Salze ad 100 % | | |

* Hydroxyethan-1,1-diphosphonsäure

Mit diesen Waschmitteln wurde unter folgenden Bedingungen gewaschen: Haushaltstrommelwaschmaschine Siemens Siwamat 570
2-Laugen-Kochwaschprogramm (90°C)
3,5 kg Beladung inkl. Testgewebe
1 mit Staub/Hautfett angeschmutztes Baumwollsträngchen (15g)
16°d-Stadtwasser
2 x 125 g Waschmittel
insgesamt 25 Wasch-/Trocknungscyclen

Nachfolgend sind die Aschegehalte in Prozent von mitgewaschenen Bleichnessel-Geweben nach 5 bzw.

25 Wäschen angegeben:

| % Asche | 11-1 | 11-2 |
|---|---|---|
| nach 5 Wäschen<br>nach 25 Wäschen | 0,6<br>1,8 | 0,3<br>0,6 |

Waschmittel 10-2 mit dem erfindungsgemäßen Schichtsilikat führt zu deutlich geringeren Aschegehalten als Waschmittel 10-1 mit Laponite RD.

Die Remissionswerte an mitgewaschener Frottierware zeigen für Waschmittel 10-2 eine deutlich geringere Vergrauungstendenz:

| % R (Frottierware) | 11-1 | 11-2 |
|---|---|---|
| nach 25 Wäschen | 77,7 | 81,3 |

Beispiel 12

Die Versuche zur Primärwaschkraft wurden in einem Launderometer unter folgenden Bedingungen durchgeführt:

Rezeptur und Dosierung:

| | |
|---|---|
| Zeolith 4A | 2,0 g/l |
| Schichtsilikat | 1,0 g/l |
| Tensid | 0,5 g/l (Na-Alkylbenzolsulfonat oder<br>$C_{12-18}$-Fettalkohol + 5EO) |
| Temperatur: | 90°C |
| Waschzeit: | 30 min. |
| Wasserhärte: | 16°dH (Ca:Mg = 5:1) |
| Anschmutzung: | Staubhautfett auf Polyester-Baumwoll-Gewebe (veredelt) |

Die Waschkraft wurde durch Messung der Remissionswerte nach dem Waschprozeß ermittelt. Die Ergebnisse der Versuche sind in der Tabelle 5 zusammengestellt. Es ist jeweils die Differenz der Remissionswerte aus Waschversuchen in Gegenwart und Abwesenheit der Schichtsilikate angegeben. Es zeigt sich, daß sich die erfindungsgemäßen Schichtsilikattypen 8 und 18 vor allem in Gegenwart von nichtionischen Tensiden deutlich günstiger verhalten.

Tabelle 5: Primärwaschkraft in Gegenwart von Schichtsilikaten

Δ = Remission (mit Schichtsilikatzusatz) - Remission (ohne Schichtsilikat)

| Schichtsilikat | Remissionswerte Δ (%) | |
|---|---|---|
| | Na-Alkylbenzolsulfonat | $C_{12-18}$-Fettalkohol + 5EO |
| synth. Hectorit Laponite RD | + 11,9 | - 9,7 |
| natürlicher Bentonit Bentonit T | + 3,3 | - 7,3 |
| erfindungsgemäßes Schichtsilikat 18 | + 12,4 | - 2,5 |
| erfindungsgemäßes Schichtsilikat 8 | + 12,2 | - 1,1 |

Beispiel 13

Die Versuche zur Primärwaschkraft wurden in einem Launderometer unter folgenden Bedingungen durchgeführt:

Rezeptur und Dosierung:

| | |
|---|---|
| Zeolith 4A | 2,0 g/l |
| Schichtsilikat, bezogen auf Aktivsubstanz | 1,0 g/l |
| Tensid | 0,5 g/l ($C_{12-18}$-Fettalkohol + 5EO oder $C_{14/15}$-Oxoalkohol + 7EO) |
| Temperatur: | 60°C |
| Waschzeit: | 30 min. |
| Wasserhärte: | 16°dH (Ca:Mg = 5.1) |
| Anschmutzungen: | SH-B Staubhautfett auf Baumwolle<br>SH-BV Staubhautfett aus Baumwolle (veredelt)<br>SH-PBV Staubhautfett auf Polyester-Baumwolle (veredelt)<br>SW-B Staubwollfett auf Baumwolle |

Die als wäßrige Suspensionen eingesetzten erfindungsgemäßen Schichtsilikate besitzen folgende Zusammensetzung:

Produkt 11: 14,8 Gew.% Schichtsilikat; 12,3 Gew.% $Na_2SO_4$

Produkt 13: 12,2 Gew.% Schichtsilikat; 10,2 Gew.% $Na_2SO_4$

Die Waschkraft wurde durch Messung der Remissionswerte nach dem Waschprozeß ermittelt. Die Ergebnisse der Versuche sind in der Tabelle 6 zusammengestellt. Es ist jeweils die Differenz der Remissionswerte aus Waschversuchen in Gegenwart und Abwesenheit der Schichtsilikate angegeben. In Gegenwart der beiden nichtionischen Tenside zeigt sich deutlich die positive Wirkung der erfindungsgemäßen Schichtsilikate an unterschiedlichen Anschmutzungen.

Tabelle 6: Primärwaschkraft in Gegenwart von Schichtsilikaten

Δ = Remission (mit Schichtsilikatzusatz)-Remission (ohne Schichtsilikat)

| Schichtsilikat | Tensid | Remissionswerte Δ (%) SH-B | SH-BW | SH-PBV | SW-B |
|---|---|---|---|---|---|
| synth. Hectorit Laponite RD | $C_{12-18}$-Fettalkohol + 5EO | - 10,8 | - 10,9 | - 5,0 | - 7,7 |
| natürl.Bentonit Bentonit T | | - 3,8 | - 1,9 | + 6,6 | - 0,9 |
| erfg. Schichtsilikat 8 | | + 1,0 | + 0,9 | + 7,2 | + 1,2 |
| " " 11 | | + 2,3 | + 3,7 | + 6,6 | + 3,6 |
| " " 12 | | + 1,7 | - 0,1 | + 4,6 | + 1,2 |
| " " 13 | | + 2,3 | + 5,2 | + 6,0 | + 3,4 |
| synth. Hectorit Laponite RD | $C_{14/15}$-Oxoalkohol + 7EO | - 0,1 | - 6,7 | - 8,4 | - 7,0 |
| natürl.Bentonit Bentonit T | | + 2,9 | - 2,3 | + 0,9 | - 0,8 |
| erfg. Schichtsilikat 8 | | + 4,0 | + 2,8 | + 3,5 | + 1,8 |
| " " 11 | | + 3,7 | + 9,3 | + 7,2 | + 4,0 |
| " " 12 | | + 3,7 | + 3,4 | + 4,9 | + 0,4 |
| " " 13 | | + 2,8 | + 8,2 | + 6,4 | + 2,1 |

Beispiel 14

Die folgenden Waschmittel wurden hergestellt:

| Rezepturbestandteil (%) \ Waschmittel | 14-1 | 14-2 | 14-3 | 14-4 | 14-5 |
|---|---|---|---|---|---|
| Na-Alkylbenzolsulfonat | 8,0 | 8,0 | 8,0 | 8,0 | 8,0 |
| Talgfettalkohol -5EO | 2,4 | 2,4 | 2,4 | 2,4 | 2,4 |
| Talgfettalkohol -14EO | 0,5 | 0,5 | 0,5 | 0,5 | 0,5 |
| Oleyl-Cetylalkohol -5,9EO | 1,5 | 1,5 | 1,5 | 1,5 | 1,5 |
| $C_{16-22}$-Fettsäure-Na-Salz | 0,8 | 0,8 | 0,8 | 0,8 | 0,8 |
| Zeolith 4A | 25,0 | 25,0 | 25,0 | 25,0 | 25,0 |
| erfg. Schichtsilikat 8 | - | 10,0 | - | - | - |
| erfg. Schichtsilikat 17[1)] | - | - | 10,0[2)] | - | - |
| Laponite RD | - | - | - | 10,0 | - |
| Dis-Thix-Extra | - | - | - | - | 10,0 |
| Natriumsilikat | 3,0 | 3,0 | 3,0 | 3,0 | 3,0 |
| Natriumcarbonat | 5,0 | 5,0 | 5,0 | 5,0 | 5,0 |
| Carboxymethyl-/Methylcellulose | 0,8 | 0,8 | 0,8 | 0,8 | 0,8 |
| Natriumperborat-tetrahydrat | 22,5 | 22,5 | 22,5 | 22,5 | 22,5 |
| Silicon-Schauminhibitor | + | + | + | + | + |
| Natriumsulfat | 21,0 | 11,0 | 11,0[3)] | 11,0 | 11,0 |
| Wasser/Salze ad 100 % | | | | | |

1) Das erfindungsgemäße Schichtsilikat 17 wird als getrocknete Suspension eingesetzt, die 50 Gew.-% Schichtsilikat und 50 Gew.-% $Na_2SO_4$ enthält.

2) bezogen auf Aktivsubstanz

3) 10 Gew.-% werden durch das erfindungsgemäße Schichtsilikat in die Waschmittelrezeptur eingebracht.

Mit diesen Waschmitteln wurde unter folgenden Bedingungen Bleichnessel-Gewebe 25 mal gewaschen:
Launderometer (10 Stahlkugeln)
Flotte 1:12 (8,4 g Gewebe/100 ml)
30 Min.Waschzeit inkl.Aufheizen auf 90°C
21°d-Wasser (Ca:Mg = 5:1) im Waschgang

16°d-Wasser (Ca:Mg = 5:1) in vier Spülgängen
Waschmittel 7 g/l

Nach 25 Wasch-/Spülcyclen wurde verascht:

| % Asche | 14-1 | 14-2 | 14-3 | 14-4 | 14-5 |
|---|---|---|---|---|---|
| nach 25 Wäschen | 1,7 | 0,8 | 0,8 | 1,3 | 1,1 |

Waschmittel 14-2 und 14-3 mit erfindungsgemäßen Schichtsilikat zeigen eine starke Inkrustationsverringerung.

Beispiel 15

Die folgenden Waschmittel wurden hergestellt:

| Rezepturbestandteil (%) \ Waschmittel | 15-1 | 15-2 | 15-3 | 15-4 |
|---|---|---|---|---|
| Na-Alkylbenzolsulfonat | 8,0 | 8,0 | 8,0 | 8,0 |
| Talgfettalkohol-5EO | 2,4 | 2,4 | 2,4 | 2,4 |
| Talgfettalkohol-14EO | 0,5 | 0,5 | 0,5 | 0,5 |
| Oleyl-Cetylalkohol-5,9EO | 1,5 | 1,5 | 1,5 | 1,5 |
| $C_{16-22}$-Fettsäure-Na-Salz | 0,8 | 0,8 | 0,8 | 0,8 |
| Zeolith 4A | 25,0 | 25,0 | 25,0 | 25,0 |
| erfg. Schichtsilikat 8 | - | 10,0 | - | 10,0 |
| Sokalan CP 5 1) | 2,0 | 2,0 | - | - |
| Na-EDTMP 2) | - | - | 0,5 | 0,5 |
| Natriumsilikat | 3,0 | 3,0 | 3,0 | 3,0 |
| Natriumcarbonat | 5,0 | 5,0 | 5,0 | 5,0 |
| Carboxymethyl-/Methylcellulose | 0,8 | 0,8 | 0,8 | 0,8 |
| Natriumperborat-tetrahydrat | 22,5 | 22,5 | 22,5 | 22,5 |
| Silicon-Schauminhibitor | + | + | + | + |
| Natriumsulfat | 13,0 | 3,0 | 14,5 | 4,5 |
| Wasser/Salze ad 100 % | | | | |

1) Handelsprodukt der BASF, Ludwigshafen: Na-salz einer mit Maleinsäure modifizierten Polyacrylsäure.

2) Ethylendiamintetramethylenphosphonsäure

Mit diesen Waschmitteln wurde Bleichnessel-Gewebe 25 mal unter den bei Anwendungsbeispiel 14 beschriebenen Bedingungen im Launderometer gewaschen und anschließend verascht:

| % Asche | 15-1 | 15-2 | 15-3 | 15-4 |
|---|---|---|---|---|
| nach 25 Wäschen | 1,9 | 0,8 | 1,6 | 0,5 |

Wie Waschmittel 15-2 und 15-4 zeigen, ist das erfindungsgemäße Schichtsilikat auch in Gegenwart zusätzlicher Cobuilder wie Polycarboxylat oder Phosphonat inkrustationsinhibierend wirksam.

Beispiel 16

Die folgenden phosphathaltigen Waschmittel wurden hergestellt:

| Rezepturbestandteil (%) \ Waschmittel | 16-1 | 16-2 | 16-3 | 16-4 |
|---|---|---|---|---|
| Na-Alkylbenzolsulfonat | 8,0 | 8,0 | 8,0 | 8,0 |
| Talgfettalkohol-5EO | 2,4 | 2,4 | 2,4 | 2,4 |
| Talgfettalkohol-14EO | 0,5 | 0,5 | 0,5 | 0,5 |
| Oleyl-Cetylalkohol-5,9EO | 1,5 | 1,5 | 1,5 | 1,5 |
| $C_{16-22}$-Fettsäure-Na-Salz | 0,8 | 0,8 | 0,8 | 0,8 |
| erfg. Schichtsilikat 8 | - | 15,0 | - | - |
| Laponite RD | - | - | 15,0 | - |
| Dis-Thix-Extra | - | - | - | 15,0 |
| Natriumtripolyphosphat | 24,0 | 24,0 | 24,0 | 24,0 |
| Natriumsilikat | 3,0 | 3,0 | 3,0 | 3,0 |
| Natriumperborat-tetrahydrat | 22,5 | 22,5 | 22,5 | 22,5 |
| Carboxymethyl-/Methylcellulose | 0,8 | 0,8 | 0,8 | 0,8 |
| Silicon-Schauminhibitor | + | + | + | + |
| Natriumsulfat | 21,0 | 6,0 | 6,0 | 6,0 |
| Wasser ad 100 % | | | | |

Die Primärwaschleistung dieser Waschmittel wurde unter folgenden Bedingungen ermittelt:
Launderometer (10 Stahlkugeln)
Flotte 1:12 (8,4 g Gewebe/100 ml)
30 Min. Waschzeit inkl.Aufheizen auf 90°C
16° d-Wasser (Ca:Mg = 5:1)
Waschmittel 7 g/l

Das Waschmittel 16-2 mit dem erfindungsgemäßen Schichtsilikat liefert gegenüber den Waschmitteln 16-3 und 16-4 die eindeutig besseren Resultate, z.B.:

| % Remission | 16-1 | 16-2 | 16-3 | 16-4 | LSD-Wert (95% Sicherheit |
|---|---|---|---|---|---|
| Staub-Hautfett (auf veredelter Polyester/Baumwolle) | 63,7 | 63,7 | 57,0 | 60,3 | 0,5 |
| Staub-Hautfett (auf veredelter Baumwolle) | 46,2 | 49,0 | 43,5 | 43,6 | 0,8 |
| Rotwein (auf Baumwolle) | 69,4 | 70,5 | 69,2 | 69,4 | 0,3 |

Mit den gleichen Waschmitteln wurde in einem Modellversuch der Einfluß auf die Aschebildung nach 25 Wäschen unter folgenden Bedingungen untersucht:
800 ml-Becherglas
Flotte 1:10 (Baumwollsträngchen,Bleichnessel)
21°d-Wasser (Ca:Mg = 5:1)
Waschzeit: 15 Min. bei 95°C
Waschmittel: 7 g/l
3 x Spülen nach jedem Waschen
25 Wasch-/Spülcyclen

Die Bestimmung der Bleichnessel-Aschegehalte nach 25 Wäschen ergab folgende Werte:

| % Asche | 16-1 | 16-2 | 16-3 | 16-4 |
|---|---|---|---|---|
| nach 25 Wäschen | 7,7 | 5,6 | 6,5 | 7,2 |

Waschmittel 16-2, das das erfindungsgemäße Schichtsilikat enthält, zeigt demnach den günstigsten inkrustationsinhibierenden Einfluß.

Beispiel 17

Die folgenden phosphatfreien Waschmittel wurden hergestellt:

| Rezepturbestandteil (%) \ Waschmittel | 17-1 | 17-2 | 17-3 | 17-4 |
|---|---|---|---|---|
| Na-Alkylbenzolsulfonat | 8,0 | 8,0 | 8,0 | 8,0 |
| Talgfettalkohol -5EO | 2,4 | 2,4 | 2,4 | 2,4 |
| Talgfettalkohol -14EO | 0,5 | 0,5 | 0,5 | 0,5 |
| Oleyl-Cetylalkohol -5,9EO | 1,5 | 1,5 | 1,5 | 1,5 |
| $C_{16-22}$-Fettsäure-Na-Salz | 0,8 | 0,8 | 0,8 | 0,8 |
| Zeolith 4A | 25,0 | 25,0 | 25,0 | 25,0 |
| erfg. Schichtsilikat 19 | - | 10,0[1] | - | - |
| Aktiv-Bentonit B[2] | - | - | 10.0 | - |
| Bentonit A[2] | - | - | - | 10,0 |
| Natriumsilikat | 3,0 | 3,0 | 3,0 | 3,0 |
| Natriumcarbonat | 5,0 | 5,0 | 5,0 | 5,0 |
| Carboxymethyl-/Methyl-cellulose | 0,8 | 0,8 | 0,8 | 0,8 |
| Natriumperborat-tetra-hydrat | 22,5 | 22,5 | 22,5 | 22,5 |
| Silicon-Schauminhibitor | + | + | + | + |
| Natriumsulfat | 21,0 | 11,0 | 11,0 | 11,0 |
| Wasser/Salze ad 100 % | | | | |

1) bezogen auf Aktivsubstanz

2) Handelsprodukte der Fa. Erbslöh, D-6222 Geisenheim/Rhein

Mit diesen Waschmitteln wurde unter den in Beispiel 14 beschriebenen Bedingungen gewaschen und anschließend die Gewebeaschen ermittelt. Die Waschmitteldosierung betrug 6 g/l.

Gewebeaschen:

| % Asche | 17-1 | 17-2 | 17-3 | 17-4 |
|---|---|---|---|---|
| nach 25 Wäschen | 3,4 | 1,0 | 2,6 | 2,6 |

Bei der gegenüber Beispiel 14 geringeren Waschmitteldosierung wurde mit dem Waschmittel 17-2 im Vergleich zu den anderen Waschmitteln deutlich stärkere Inkrustationsverminderung erreicht.

## Patentansprüche

1. Synthetische. feinteilige, wasserunlösliche Schichtsilikate mit smectitähnlicher Kristallphase, jedoch erhöhten Gehalten an gebundenem Alkali und Silikat und einem im Vergleich zu reinen Schichtsilikaten dieses Typs in wäßriger. Suspension deutlich verringertem Quellvermögen - bestimmt als Quotient des Sedimentvolumens ($V_s$) / Gesamtvolumen (V) nach vorheriger Behandlung mit überschüssiger Sodalösung, sorgfältigem Waschen und 20 Stunden nach Aufschlämmung in 9 Gewichtsteilen Wasser / ein Gewichtsteil Schichtsilikat - von $V_s/V$ kleiner als 0,6.-mit der Oxidsummenformel

   $MgO . aM_2O . bAl_2O_3 . cSiO_2 . nH_2O$

   worin M für Natrium, gegebenenfalls zusammen mit Lithium mit der Maßgabe steht, daß das Molverhältnis Na/Li wenigstens 2 beträgt und worin weiterhin a, b, c und n jeweils eine Zahl in den Bereichen

   a = 0,05 bis 0,4;
   b = 0 bis 0,3;
   c = 1,2 bis 2,0;
   n = 0,3 bis 3,0

   bedeuten und dabei n für das in der Kristallphase gebundene Wasser steht.

2. Synthetische Schichtsilikate nach Anspruch 1, dadurch gekennzeichnet, daß die Parameter a, b und c in den folgenden Bereichen liegen:

   a = 0,15 bis 0,30;
   b = 0 bis 0,10;
   c = 1,3 bis 1,5

3. Synthetische Schichtsilikate nach Ansprüchen 1 und 2, dadurch gekennzeichnet, daß sie nach Suspension in Wasser (16 °dH, Raumtemperatur) ein Quellvermögen kleiner als 0,4 besitzen. wobei vorzugsweise das Verhältnis a/b gleich oder größer 3 ist.

4. Synthetische Schichtsilikate nach Ansprüchen 1 bis 3, dadurch gekennzeichnet, daß sie mischkristallin ausgebildet sind und dabei strukturbestimmende saponit- und/oder hectoritähnliche Kristallphasen aufweisen, welche in unregelmäßiger Anordnung mit kritallinem Alkalipolysilikat durchsetzt sind.

5. Synthetische Schichtsilikate nach Ansprüchen 1 bis 4, dadurch gekennzeichnet, daß die Mischkristallsysteme der Strukturformel

   $[Na_{x+y} (Mg_{3-x}Li_x) (Si_{4-y}Al_y)O_{10}(OH)_2].m[Na_2Si_z0_{2z+1}]. nH_20$

   entsprechen, worin gilt

| | | bevorzugt: |
|---|---|---|
| x | = 0 - 0.3 | 0 - 0.1 |
| y | = 0 - 0.5 | 0 - 0.4 |
| x+y | = 0.1 - 0.5 | 0.2 - 0.4 |
| z | = 1 - 22 | 1 - 14 |
| m | = 0.1 - 0.5 | 0.1 - 0.3 |
| n | = 0 - 8 | 2 - 6 |

6. Synthetische Schichtsilikate nach Ansprüchen 1 bis 5, dadurch gekennzeichnet, daß sie überschüssiges, nicht in die Kristallstruktur eingebundenes Alkali, insbesondere Natriumhydroxid oder Soda,

enthalten und/oder in inniger Abmischung mit insbesondere wasserlöslichen Salzen, vorzugsweise Alkalisulfaten und/oder -carbonaten vorliegen.

7. Verfahren zur Herstellung von synthetischen feinteiligen Schichtsilikaten mit smectitähnlicher Kristallphase nach Ansprüchen 1 bis 6, dadurch gekennzeichnet, daß man wasserlösliches Natriumsilikat mit Oxiden, Hydroxiden oder wasserlöslichen Salzen von Magnesium sowie Aluminium und/oder Lithium in den Molverhältnissen des herzustellenden mischkristallinen Schichtsilikats in wäßriger Lösung beziehungsweise Aufschlämmung bei 150 bis 250°C unter Eigendruck für 1 bis 20 Stunden der hydrothermalen Umsetzung unterwirft.

8. Verfahren nach Anspruch 7, dadurch gekennzeichnet, daß man mit Alkaliüberschuß arbeitet und dabei insbesondere Natriumhydroxid und/oder Soda als Überschußalkali einsetzt.

9. Verfahren nach Ansprüchen 7 und 8, dadurch gekennzeichnet, daß man unter intensivem Rühren der Reaktionsmischung arbeitet.

10. Verfahren nach Ansprüchen 7 bis 9, dadurch gekennzeichnet, daß man bei Temperaturen von 170 bis 200 °C, insbesondere im Bereich von 170 bis 190 °C und bei einer Verfahrensdauer von 2 bis 8 Stunden, vorzugsweise von 4 bis 6 Stunden arbeitet.

11. Verfahren nach Ansprüchen 7 bis 10, dadurch gekennzeichnet, daß man zur Herstellung eines wasserarmen Reaktionsproduktes, das als ganzes ohne Abtrennung der Mutterlauge der Weiterverarbeitung zugeführt werden kann, mit Wassermengen im Bereich von 50 bis 100 Mol $H_20$, bezogen auf die wasserfreie Oxidformel

$$MgO\ .\ aM_20\ .\ bAl_20_3\ .\ cSiO_2$$

mit den im Anspruch 1 angegebenen Bedeutungen für M, a, b und c arbeitet.

12. Verwendung synthetischer, feinteiliger, wasserunlöslicher Schichtsilikate mit smectitähnlicher Kristallphase nach Ansprüchen 1 bis 6 als Waschmittelrohstoff in Wasch-und Reinigungsmitteln, insbesondere Textilwaschmitteln.

13. Verwendung synthetischer, feinteiliger, wasserunlöslicher Schichtsilikate nach Anspruch 12, dadurch gekennzeichnet, daß das Reaktionsprodukt aus der Verfahrensstufe der hydrothermalen Herstellung der erfindungsgemäßen Schichtsilikate vor dem Einbringen in Wasch-und Reinigungsmittel nach einer der folgenden Methoden aufbereitet sind:
    a) Abtrennen der Mutterlauge und Waschen des Rückstandes
    b) Abtrennen der Mutterlauge
    c) ohne Abtrennen der Mutterlauge

14. Verwendung synthetischer, feinteiliger, wasserunlöslicher Schichtsilikate nach Anspruch 13, dadurch gekennzeichnet, daß die Mutterlauge nach (a) durch Filtrieren oder Zentrifugieren abgetrennt wird und anschließend der Rückstand so lange gewaschen wird, bis das Reaktionsprodukt vollständig von wasserlöslichen Anteilen befreit ist.

15. Verwendung synthetischer, feinteiliger, wasserunlöslicher Schichtsilikate nach Anspruch 13, dadurch gekennzeichnet, daß die Mutterlauge nach (b) durch Filtrieren oder Zentrifugieren abgetrennt wird.

16. Verwendung synthetischer, feinteiliger, wasserunlöslicher Schichtsilikate nach Anspruch 13, dadurch gekennzeichnet, daß das Reaktionsprodukt, das nach (c) als ganzes ohne Abtrennen der Mutterlauge der Weiterverarbeitung zugeführt werden kann, bezogen auf die wasserfreie Formel

$$MgO\ .\ aM_20\ .\ bAl_20_3\ .\ cSi0_2$$

mit den im Anspruch 1 angegebenen Bedeutungen für M, a, b und c, einen Wasseranteil von 50 - 100 Mole $H_20$ enthält.

**17.** Wasch- und Reinigungsmittel, insbesondere Textilwaschmittel, auf Basis synthetischer Tenside und eines Buildersystems dafür, enthaltend als wesentliche Komponente feinteilige, kristalline, synthetische Alumosilikate vom Zeolith-Typ zusammen mit Co-Buildern zur Steigerung der Primär- und/oder Sekundärwaschkraft, dadurch gekennzeichnet, daß sie als Co-Builder wenigstens anteilsweise synthetische Schichtsilikate mit deutlich verringertem Quellvermögen nach Ansprüchen 1 bis 6 enthalten.

**18.** Wasch- und Reinigungsmittel nach Anspruch 17, dadurch gekennzeichnet, daß sie Zeolith NaA als Hauptbuilderbestandteil, vorzugsweise in Mengen von 10 bis 35 Gew.-%, und die synthetischen Schichtsilikate mit deutlich verringertem Quellvermögen in Mengen von 5 bis 20 Gew.-% - jeweils bezogen auf Waschmittel-Gesamtgewicht - enthalten.

**19.** Wasch-und Reinigungsmittel, insbesondere Textilwaschmittel, auf Basis synthetischer Tenside und eines Buildersystems dafür, enthaltend Phosphatbuilder in Kombination mit Co-Buildern zur Steigerung der Primär- und/oder Sekundärwaschkraft, dadurch gekennzeichnet, daß sie als Co-Builder wenigstens anteilweise synthetische Schichtsilikate mit deutlich reduziertem Quellvermögen nach Ansprüchen 1 bis 6 enthalten.

**20.** Wasch-und Reinigungsmittel nach Anspruch 19, dadurch gekennzeichnet, daß sie Phosphatbuilder in Mengen von 20 - 25 Gew.% und synthetische Schichtsilikate mit reduziertem Quellvermögen in Mengen von 5 - 20 Gew.% - jeweils bezogen auf Waschmittel-Gesamtgewicht - enthalten.

## Claims

**1.** Synthetic, finely divided, water-insoluble layer silicates having a smectite-like crystal phase, but increased contents of bound alkali and silicate and a distinctly reduced swelling power $V_s/V$ in aqueous suspension (determined as the quotient of the sediment volume ($V_s$)/total volume (V) after preliminary treatment with excess soda solution, careful washing and 20 hours after suspension in 9 parts by weight water/1 part by weight layer silicate) of less than 0.6 by comparison with pure layer silicates of this type, with the following oxide summation formula

$$MgO \, . \, aM_2O \, . \, bAl_2O_3 \, . \, cSiO_2 \, . \, nH_2O$$

in which M represents sodium, optionally together with lithium, with the proviso that the molar ratio of sodium to lithium is at least 2, and in which the parameters a, b, c and n each represent a number in the following ranges:
a = 0.05 to 0.4
b = 0 to 0.3
c = 1.2 to 2.0
n = 0.3 to 3.0
n standing for the water bound in the crystal phase.

**2.** Synthetic layer silicates as claimed in claim 1, characterized in that the parameters a, b and c lie within the following ranges:
a = 0.15 to 0.30;
b = 0 to 0.10;
c = 1.3 to 1.5,
the ratio of a to b preferably being equal to or greater than 3.

**3.** Synthetic layer silicates as claimed in claims 1 and 2, characterized in that, after suspension in water (16° Gh, room temperature), they have a swelling power of less than 0.4.

**4.** Synthetic layer silicates as claimed in claims 1 to 3, characterized in that they are mixed crystals and comprise structure-determining saponite- and/or hectorite-like crystal phases which are irregularly permeated by crystalline alkali metal polysilicate.

**5.** Synthetic layer silicates as claimed in claims 1 to 4, characterized in that the mixed crystal systems correspond to the following structural formula

$[Na_{x+y}(Mg_{3-x}Li_x)(Si_{4-y}Al_y)O_{10}(OH)_2].m[Na_2Si_2O_{2z+1}].nH_2O$

in which

| | | | | |
|---|---|---|---|---|
| x | = 0 to 0.3, | preferably | 0 | to 0.1 |
| y | = 0 to 0.5, | | 0 | to 0.4 |
| x + y | = 0.1 to 0.5, | | 0.2 | to 0.4 |
| z | = 1 to 22, | | 1 | to 14 |
| m | = 0.1 to 0.5, | | 0.1 | to 0.3 |
| n | = 0 to 8, | | 2 | to 6 |

**6.** Synthetic layer silicates as claimed in claims 1 to 5, characterized in that they contain excess alkali, particularly sodium hydroxide or soda, which is not bound into the crystal structure and/or are present in intimate admixture with, in particular, water-soluble salts, preferably alkali metal sulfates and/or carbonates.

**7.** A process for producing the synthetic, finely divided layer silicates having a smectite-like crystal phase claimed in claims 1 to 6, characterized in that the water-soluble sodium silicate is hydrothermally reacted with oxides, hydroxides or water-soluble salts of magnesium and aluminium and/or lithium in the molar ratios of the mixed-crystalline layer silicate to be produced, the reaction being carried out over a period of 1 to 20 hours at 150 to 250 °C under natural pressure either in aqueous solution or in aqueous suspension.

**8.** A process as claimed in claim 7, characterized in that an alkali excess is used and sodium hydroxide and/or soda in particular is used as the excess alkali.

**9.** A process as claimed in claims 7 and 8, characterized in that the reaction mixture is intensively stirred.

**10.** A process as claimed in claims 7 to 9, characterized in that the reaction is carried out over a period of from 2 to 8 hours and preferably over a period of from 4 to 6 hours at a temperature of from 170 to 200 °C and more especially at a temperature of from 170 to 190 °C.

**11.** A process as claimed in claims 7 to 10, characterized in that, to prepare a reaction product of low water content which may be further processed as such, i.e. without separation of the mother liquor, quantities of water of from 50 to 100 mols of $H_2O$, based on the water-free oxidic formula

$MgO . aM_2O . bAl_2O_3 . cSiO_2$

in which M, a, b and c are as defined in claim 1, are used.

**12.** The use of the synthetic, finely divided, water-insoluble layer silicates with a smectite-like crystal phase claimed in claims 1 to 6 as a constituent of detergents and cleaning preparations, particularly fabric detergents.

**13.** The use of synthetic, finely divided, water-insoluble layer silicates as claimed in claim 12, characterized in that before incorporation in detergents and cleaning preparations the reaction product emanating from the hydrothermal production of the layer silicates according to the invention is worked up by one of the following methods:
a) separation of the mother liquor and washing of the residue,
b) separation of the mother liquor,
c) without separation of the mother liquor.

**14.** The use of synthetic, finely divided, water-insoluble layer silicates as claimed in claim 13, characterized

in that, in method a), the mother liquor is separated off by filtration or centrifugation, after which the residue is washed until the reaction product is completely free from water-soluble components.

**15.** The use of synthetic, finely divided, water-insoluble layer silicates as claimed in claim 13, characterized in that, in method b), the mother liquor is separated off by filtration or centrifugation.

**16.** The use of synthetic, finely divided, water-insoluble layer silicates as claimed in claim 13, characterized in that the reaction product which, in method c), may be further processed as such, i.e. without separation of the mother liquor, contains from 50 to 100 mols of water, based on the water-free formula

$$MgO \, . \, aM_2O \, . \, bAl_2O_3 \, . \, cSiO_2$$

in which M, a, b and c are as defined in claim 1.

**17.** Detergents and cleaning preparations, particularly fabric detergents, based on synthetic surfactants and a builder system therefor, containing as essential component finely divided, crystalline, synthetic alumosilicates of the zeolite type together with co-builders to enhance primary and/or secondary detergency, characterized in that the co-builders used are - in part at least - the synthetic layer silicates of distinctly reduced swellability claimed in claims 1 to 6.

**18.** Detergents and cleaning preparations as claimed in claim 17, characterized in that they contain zeolite NaA as the main builder component, preferably in quantities of from 10 to 35% by weight, and the synthetic layer silicates of distinctly reduced swellability in quantities of from 5 to 20% by weight, based in each case on the total weight of the detergent.

**19.** Detergents and cleaning preparations, particularly fabric detergents, based on synthetic surfactants and a builder system therefor, containing phosphate builders in combination with co-builders to enhance primary and/or secondary detergency, characterized in that the co-builders used are - in part at least - the synthetic layer silicates of distinctly reduced swellability claimed in claims 1 to 6.

**20.** Detergents and cleaning preparations as claimed in claim 19, characterized in that they contain phosphate builders in quantities of from 20 to 25% by weight and synthetic layer silicates of reduced swellability in quantities of from 5 to 20% by weight, based in each case on the total weight of detergent.

**Revendications**

**1.** Silicates stratifiés synthétiques, insolubles dans l'eau, à fines particules et à phase cristalline similaire à celle de la bentonite, mais avec toutefois des concentrations accrues en alcali et en silicate fixés et avec un pouvoir gonflant en suspension aqueuse nettement moindre par rapport aux silicates stratifiés purs de ce type, ce pouvoir gonflant étant déterminé comme le quotient du volume de sédimentation (Vs) et du volume total (V), après traitement préalable par une solution de carbonate de sodium en excès, lavage soigneux et 20 heures après mise en suspension dans 9 parties d'eau pour une partie en poids de silicate stratifié, ledit quotient Vs/V étant inférieur à 0,6, avec la formule brute des oxydes

$$MgO \, . \, aM_2O \, . \, bAl_2O_3 \, . \, cSiO_2 \, . \, nH_2O$$

dans laquelle M représente le sodium, éventuellement en mélange avec du lithium, à condition que le rapport molaire Na/Li atteigne au moins 2, et dans laquelle les paramètres a, b, c et n représentent chacun une valeur numérique comprise dans les intervalles ci-après:

a = 0,05 à 0,4;
b = 0 à 0,3;
c = 1,2 à 2,0;
n = 0,3 à 3,0

et où n représente l'eau fixée dans la phase cristalline

**2.** Silicates stratifiés synthétiques selon la revendication 1, caractérisés en ce que les paramètres a, b et c sont situés dans les intervalles ci-après:

a = 0,15 à 0,30:
b = 0 à 0,10;
c = 1,3 à 1,5

**3.** Silicates stratifiés synthétiques selon les revendications 1 et 2, caractérisés en ce qu'ils possèdent après suspension dans l'eau (16 ° dH, température ambiante) un pouvoir gonflant inférieur à 0,4.

**4.** Silicates stratifiés synthétiques selon les revendications 1 à 3, caractérisés en ce qu'ils sont constitués de cristallisations mixtes et présentent des phases cristallines déterminant la structure, similaires à celles de la saponite et/ou de l'hectorite, qui sont entrelacées en disposition irrégulière de polysilicate cristallin de métaux alcalins.

**5.** Silicates stratifiés synthétiques selon les revendications 1 à 4, caractérisés en ce que les systèmes de cristallisations mixtes correspondent à la formule de structure

$[Na_{x+y}\,(Mg_{3-x}Li_x)\,(Si_{4-y}Al_y)O_{10}(OH_2].m[Na_2Si_z0_{2z+1}].nH_20$

dans laquelle représentent

| | | | |
|---|---|---|---|
| x | = 0 à 0,3 | de préférence: | 0 à 0,1 |
| y | = 0 à 0,5 | | 0 à 0,4 |
| x+y | = 0,1 à 0,5 | | 0,2 à 0,4 |
| z | = 1 à 22 | | 1 à 14 |
| m | = 0,1 à 0,5 | | 0,1 à 0,3 |
| n | = 0 à 8 | | 2 à 6 |

**6.** Silicates stratifiés synthétiques selon les revendications 1 à 5, caractérisés en ce qu'ils contiennent des alcalis en excès, non intégrés dans la structure cristalline, en particulier de l'hydroxyde ou du carbonate de sodium et/ou sont présents en mélange intime avec en particulier des sels solubles dans l'eau, de préférence des sulfates et/ou des carbonates de métaux alcalins.

**7.** Procédé de fabrication de silicates stratifiés synthétiques, à fines particules et à phase cristalline similaire à celle de la bentonite, selon les revendications 1 à 6, caractérisé en ce que l'on soumet à une réaction hydrothermale du silicate de sodium soluble dans l'eau conjointement avec des oxydes, des hydroxydes ou des sels solubles dans l'eau de magnésium, ainsi que d'aluminium et/ou de lithium dans les rapports molaires de la cristallisation mixte du silicate stratifié à préparer, en solution ou en suspension aqueuse, à 150 à 250 ° C, sous leur propre pression, pendant 1 à 20 heures.

**8.** Procédé selon la revendication 7, caractérisé en ce que l'on opère avec un excès d'alcali, et en ce que l'on met en oeuvre en particulier de l'hydroxyde de sodium et/ou du carbonate de sodium.

**9.** Procédé selon les revendications 7 et 8, caractérisé en ce que l'on opère sous agitation intensive du mélange réactionnel.

**10.** Procédé selon les revendications 7 à 9, caractérisé en ce que l'on opère à des températures de 170 à 200 ° C, en particulier comprises dans la plage de 170 à 190 ° C et avec une durée de procédé de 2 à 8 heures, de préférence de 4 à 6 heures.

**11.** Procédé selon les revendications 7 à 10, caractérisé en ce que pour préparer un produit réactionnel pauvre en eau, qui peut être amené dans sa totalité au traitement ultérieur sans séparation de la

lessive-mère, on opère avec des quantités d'eau situées dans l'intervalle de 50 à 100 moles de $H_2O$, par rapport à la formule anhydre des oxydes

$MgO . aM_2O . bAl_2O_3 . cSiO_2$

avec les significations pour M, a, b et c spécifiées dans la revendication 1.

**12.** Mise en oeuvre de silicates stratifiés synthétiques, à fines particules, insolubles dans l'eau et à phase cristalline similaire à celle de la bentonite, selon les revendications 1 à 6, comme matière première de détergent dans des agents de lavage et de nettoyage, en particulier dans des détergents pour les textiles.

**13.** Mise en oeuvre de silicates stratifiés synthétiques, à fines particules et insolubles dans l'eau, selon la revendication 12, caractérisée en ce que le produit réactionnel résultant de l'étape de procédé de la fabrication hydrothermale des silicates stratifiés est préparé avant son incorporation dans les agents de lavage et de nettoyage, selon l'une des méthodes ci-après:
a) Séparation de la lessive-mère et lavage du résidu
b) Séparation de la lessive-mère
c) Sans séparation de la lessive-mère.

**14.** Mise en oeuvre de silicates stratifiés synthétiques, à fines particules et insolubles dans l'eau, selon la revendication 13, caractérisée en ce que la lessive-mère est séparée selon a) par filtrage ou centrifugation et en ce que le résidu est ensuite lavé jusqu'à ce que le produit réactionnel soit complètement débarrassé de fractions solubles dans l'eau.

**15.** Mise en oeuvre de silicates stratifiés synthétiques, à fines particules et insolubles dans l'eau, selon la revendication 13, caractérisée en ce que la lessive-mère est séparée selon b) par filtrage ou centrifugation.

**16.** Mise en oeuvre de silicates stratifiés synthétiques, à fines particules et insolubles dans l'eau, selon la revendication 13, caractérisée en ce que le produit réactionnel, qui peut être amené selon c) dans sa totalité, sans séparation de la lessive-mère, au traitement ultérieur, contient par rapport à la formule anhydre

$MgO . aM_2O . bAl_2O_3 . cSiO_2$

avec les significations pour M, a, b et c spécifiées dans la revendication 1 et une proportion d'eau comprise dans la plage de 50 à 100 moles de $H_2O$.

**17.** Agents de lavage et de nettoyage, en particulier détergents pour les textiles, à base de tensio-actifs synthétiques et d'un système d'adjuvant à cet effet, contenant comme composants essentiels, des aluminosilcates synthétiques, cristallins et à fines particules du type de la zéolithe, conjointement avec des co-adjuvants en vue d'accroître la force de lavage primaire et/ou secondaire, caractérisés en ce qu'ils contiennent comme coadjuvants, au moins en partie, des silicates stratifiés synthétiques à pouvoir gonflant nettement réduit, selon les revendications 1 à 6.

**18.** Agents de lavage et de nettoyage selon la revendication 17, caractérisés en ce qu'ils renferment de la zéolithe NaA comme composant adjuvant principal, de préférence en quantités comprises dans l'intervalle de 10 à 35 % en poids et les silicates stratifiés synthétiques à pouvoir gonflant nettement réduit en proportions allant de 5 à 20 % en poids, dans chaque cas par rapport au poids total du détergent.

**19.** Agents de lavage et de nettoyage, en particulier détergents pour les textiles, à base de tensio-actifs synthétiques et d'un système d'adjuvant à cet effet, contenant des agents de phosphorisation en association avec des co-adjuvants, en vue d'accroître la force de lavage primaire et/ou secondaire, caractérisés en ce qu'ils contiennent comme co-adjuvants, au moins en partie, des silicates stratifiés synthétiques à pouvoir gonflant nettement réduit, selon les revendications 1 à 6.

**20.** Agents de lavage et de nettoyage selon la revendication 19, caractérisés en ce qu'ils contiennent les agents de phosphorisation en proportions comprises dans la plage de 20 à 25 % en poids et les silicates stratifiés synthétiques en quantités allant de 5 à 20 % en poids, dans chaque cas par rapport au poids total du détergent.